# EUROPÄISCHE PATENTANMELDUNG

(11) **EP 3 689 831 A1**
(43) Veröffentlichungstag der Anmeldung: **05.08.2020**
(21) Anmeldenummer: 20152939.3
(22) Anmeldetag: 21.01.2020
(51) Int. Cl.: C03B 5/20, C03B 7/02, C03B 5/26, C03B 5/167

(54) **VORRICHTUNG UND VERFAHREN ZUM HERSTELLEN EINES GLASPRODUKTS SOWIE GLASPRODUKT**

(30) Priorität: 30.01.2019 DE 102019102307
(71) Anmelder: SCHOTT AG, 55122 Mainz (DE)
(72) Erfinder: SCHMIDBAUER, Wolfgang, 55126 Mainz (DE); HABERKORN, Markus, 95652 Waldsassen (DE); KOEHLER, Andreas, 95698 Neualbenreuth (DE); BENSBERG, Andreas, 55131 Mainz (DE); BERGMANN, Christoph, 30167 Hannover (DE); TRINKS, Volker, 95666 Mitterteich (DE); EICHHOLZ, Rainer, 60323 Frankfurt am Main (DE); HAHN, Michael, 65329 Hohenstein (DE); WEGENER, Holger, 31061 Alfeld (DE); SCHWERTFEGER, Rainer, 37632 Eschershausen (DE)
(74) Vertreter: Blumbach · Zinngrebe Patentanwälte PartG mbB

(57) **Zusammenfassung**

Die Erfindung betrifft eine Vorrichtung zum Herstellen eines Glasprodukts sowie ein Verfahren zum Herstellen eines Glasprodukts sowie ein solcherart hergestelltes oder herstellbares Glasprodukt. Die Vorrichtung enthält Bereiche zum Aufschmelzen und zum Heissformgeben sowie eine als Rohr ausgebildete Überführungsvorrichtung. Ein Teil des Rohrs ragt in die Glasschmelze hinein und ist vom Boden der Vorrichtung beabstandet. Das Auftreten von Knoten im Glasprodukt wird vermindert.

## Beschreibung

### Gebiet der Erfindung

Die Offenbarung betrifft allgemein eine Vorrichtung zum Herstellen eines Glasprodukts sowie ein Verfahren zum Herstellen eines Glasprodukts sowie ein solcherart hergestelltes oder herstellbares Glasprodukt.

### Hintergrund der Erfindung

In Glasprodukten mit hohen Qualitätsansprüchen sind feste Glasfehler bekannt, welche auch als Knoten bezeichnet werden.

Es sind unterschiedliche Mechanismen der Knotenbildung bekannt. Beispielsweise ist es möglich, dass Knoten aus Steinchen bestehen, also beispielsweise aus Teilen des Gemenges, welche nur unzureichend aufgeschmolzen sind. Hauptursache hiervon ist die unzureichende Auflösung von SiO₂-Körnern, welche sich im weiteren Schmelzverlauf mit einem Lösungshof umgeben. Kennzeichen eines solchen Knotens ist oftmals eine sichtbare Agglomeration von Gemengekörner im Zentrum. Weitaus häufiger ist jedoch der Mechanismus, dass Knoten aus dem teilweise angeschmolzenen Feuerfestmaterial einer Schmelzvorrichtung und/oder auch aus dem oberflächennahen Fehlglas einer zur Verdampfung neigenden Glassynthese entstehen. Solche Knoten können teilweise als sogenannte "transparente Knoten" ausgebildet sein. Unter einem transparenten Knoten ist hierbei zu verstehen, dass der Knoten aus vollständig geschmolzenem glasigen oder zumindest glasartigem Material besteht. Ein nicht transparenter Knoten ist im Unterschied dazu ein Knoten, welcher geschmolzenes glasiges oder zumindest glasartiges Material umfasst, in dessen Mitte zusätzlich dazu aber noch ein fester Partikel vorliegt, welcher beispielsweise aus rekristallisiertem SiO₂ oder aus nicht oder noch nicht aufgelöstem Feuerfestmaterial bestehen kann.

Das von Knoten umfasste und/oder das den Knoten bildende Glas wird, unabhängig von der genauen Zusammensetzung und der genauen Entstehung dieses Glases, im Rahmen der vorliegenden Offenbarung als Fehlglas bezeichnet. Fehlglas, welches beispielsweise aus der Verdampfung leichtflüchtiger Substanzen an der Oberfläche einer Glasschmelze resultiert, wird auch als Verdampfungsfehlglas bezeichnet. Fehlglas, welches beispielsweise aus der Korrosion des Feuerfestmaterials durch die Glasschmelze des Ausgangsglases entsteht, wird im Rahmen der vorliegenden Offenbarung als Korrosionsfehlglas oder auch als Feuerfestfehlglas bezeichnet. Allgemein werden unter Knoten, welche auch als "knot", "tank drop", "crown drop" oder "furnace drop" bezeichnet werden, im Rahmen der vorliegenden Offenbarung unabhängig von der genauen Art ihrer Entstehung zumindest teilweise glasartige bzw. glasige und zumindest hochviskose, oft SiO₂-reiche Fehler im Glas verstanden. Diese Knoten können beispielsweise mit einem sogenannten Lösungshof oder Schlierenfaden verbunden sein. In der Extremform der Auflösung resultiert eine meist SiO₂-haltige und/oder SiO₂-angereicherte Schliere

Hinsichtlich der Zusammensetzung solcher zumindest teilweise glasiger und/oder glasartiger und zumindest hochviskoser Fehler kann grob zwischen zwei Gruppen unterschieden werden. Die erste Gruppe von Knoten weisen eine Zusammensetzung auf, die in etwa der eines Verdampfungsfehlglases entspricht. Unter einem Verdampfungsfehlglas wird im Rahmen der vorliegenden Offenbarung ein Glas verstanden, welches durch Verdampfung flüchtiger Substanzen, wie beispielsweise Natriumborat und/oder Borsäure, aus der Grundglassynthese entsteht. Es handelt sich hierbei also um zumindest hochviskose, im Extremfall sogar feste, Glasfehler, welche insbesondere an der Oberfläche einer Glasschmelze entstehen können, aber auch an Grenzflächen unterhalb der Glasbadoberfläche, die einem freien Gasaustausch unterliegen. Die zweite Gruppe von Knoten beinhaltet insbesondere solche zumindest hochviskosen und im Extremfall sogar feste Glaskörper, deren Zusammensetzung eine Erzeugung des Glasfehlers in der Wechselwirkung zwischen Feuerfestmaterial und der Glasschmelze nahelegt.

Im Rahmen der vorliegenden Offenbarung wird unterschieden zwischen Glasknoten, welche eine Zusammensetzung eines Verdampfungsfehlglases aufweisen und welche im Rahmen der vorliegenden Offenbarung auch als "Verdampfungsknoten" bezeichnet werden, sowie den Knoten, welche aus der Korrosion des Feuerfestmaterials, also einem Feuerfestfehlglas, resultieren und im Rahmen der vorliegenden Offenbarung auch als Feuerfestknoten (FK) bezeichnet werden.

Sowohl die Verdampfungsknoten als auch die Feuerfestknoten besitzen eines charakteristischen, unstationären Verlauf in ihrer Fehlerdichte. Bei ansonsten gleichbleibendem Ablauf des Herstellverfahrens kann es also dazu kommen, dass Phasen hoher Fehlerfreiheit spontan von Phasen mit einem hohen Fehleraufkommen unterbrochen werden können. Diese Fluktuationen können sowohl in einer kurzen Zeitfolge von einigen Minuten, aber auch über einen längeren Zeitraum von Wochen und Monaten beobachtet werden. Die Knotendichte kann dabei Werte von mehreren 1000 Knoten / kg Glas annehmen, wobei sich eine solch hohe Knotendichte auch über einen Verlauf von mehreren Wochen erstrecken kann. Dies bedeutet einen sehr hohen Produktionsausfall.

Vorrichtungen zum Herstellen von Glasprodukten sind beispielsweise beschrieben in der US 3 450 653, der US 7 017 372 B2, der US 2017/0050874 A1, der US 2014/366583 A1, der US 5 655 434 B2, der US 5 609 661 B, der SU 1318553, der US 2 866 383 der US 2 808 446, der SU 977410, der US 3 676 099, der US 4 662 927, der US 5 078777, der US 4 424 071, der DE 10141858, der US 10208535, der US 6 227 007, der US 4 365 987, der US 4 388 721, der JP 2013/193905 A, der JP 2013/193906, der WO 2007/078875, der US 4 029 887, der US 3 266 881 und der US 2 691 689. Jedoch ist hier die Verminderung von Glasfehlern aufgrund von Knoten nicht adressiert.
Maßnahmen zur Verhinderung von Knoten sind in der Regel zusätzliche Einbauten oder geometrische Änderungen im Bereich der Rinne oder der Einsatz von Rührern, wobei entweder das Weiterfließen knotenhaltigen Glases (also von Fehlglas) verhindert werden soll oder das knotenhaltige Glas (Fehlglas) vom fehlerfreien Glas (Gutglas) abgeleitet werden soll. Diese Änderungen am Aufbau einer Vorrichtung zum Herstellen eines Glasprodukts sind in der Regel jedoch mit einem erheblichen Aufwand verbunden und/oder nicht ausreichend effektiv in der Verhinderung von Knoten.

Die europäische Patentanmeldung EP 1 285 886 A2 beschreibt beispielsweise ein Verfahren sowie eine Vorrichtung zum Herstellen einer Glasschmelze. Die Vorrichtung ist dabei so ausgestaltet, dass Kurzschlüsse der Glasströmung von der Oberfläche zur Auslassöffnung in einem Schmelzaggregat oder einer Schmelzwanne vermieden werden sollen, sodass möglichst alle Schmelzpartikel eine gleiche Verweildauer in der Schmelzwanne haben.

Dem Verfahren und der Vorrichtung nach EP 1 285 886 A2 liegt dabei der Gedanke zugrunde, dass Knoten bzw. Knotenglas sich vorwiegend an der Glasoberfläche bildeten und nicht vollständig aufgeschmolzene Gemengepartikel darstellten. Diese Knoten könnten entsprechend dadurch minimiert werden, indem verhindert wird, dass lediglich kurz in der Schmelzwanne verbleibendes Material aus der Schmelzwanne in andere Bereiche einer Vorrichtung zum Herstellen von Glas überführt wird. In EP 1 285 886 A2 werden dabei verschiedene Maßnahmen vorgeschlagen, um die Verweilzeit in der Schmelzwanne für alle Bestandteile zu erhöhen:
- Es kann eine Abdeckung über dem Auslass vorgesehen sein oder
- Es kann ein Rohr vorgesehen sein, das in einem bestimmten Abstand oberhalb des Wannenbodens angeordnet ist und beispielsweise einen halben Meter in die Schmelze hineinragt, oder
- Es kann im Bereich des Auslasses eine Zusatzheizung vorgesehen sein, durch welche die Glasströmung in der Schmelzwanne, die ja eine Konvektionsströmung ist, umlenkt und somit Kurzschlussströme verhindert.

Es hat sich allerdings gezeigt, dass auch die in EP 1 285 866 A2 vorgeschlagenen Lösungen zur Verminderung von Knoten nicht ausreichend sind.

So liegt dem der EP 1 285 866 A2 zugrundeliegenden Verständnis nach der Ursprung der Knoten in der Oberflächenschicht einer Schmelzwanne, also in einem Bereich einer Vorrichtung zum Herstellen eines Glasprodukts, in welchem es zum Aufschmelzen eines Gemenges, gegebenenfalls auch zu einem Läutern des aufgeschmolzenen Gemenges kommt. Dies ist jedoch nicht vollständig richtig, vielmehr können Knoten auch und insbesondere durch Eintrag des Wannenmaterials entstehen, wie vorstehend auch beschrieben.

Auch entstehen Knoten nicht lediglich in einem Bereich einer Vorrichtung zum Herstellen eines Glasprodukts, in welchem das Gemenge aufgeschmolzen wird. Es zeigt sich vielmehr, dass auch in anderen Bereichen einer solchen Vorrichtung, beispielsweise im Bereich zum Konditionieren (auch als Arbeitswanne bezeichnet), Knoten entstehen können bzw. auftreten.

Darüber hinaus wird durch eine Einragung eines Rohrs von einem halben Meter Länge oder mehr, welches auch noch in einem gewissen Abstand vom Boden einer Schmelzwanne angeordnet ist, das wirksame Schmelzvolumen sehr stark vermindert.

Insgesamt sind daher die im Stand der Technik vorgeschlagenen Lösungen nicht ausreichend, um Knoten in einem Glasprodukt zu verhindern oder zumindest deren Auftreten zu vermindern.

Es besteht damit ein Bedarf an einer Vorrichtung sowie einem Verfahren, welche die Schwächen des Standes der Technik, insbesondere das Auftreten von Knoten, zumindest mindert.

### Aufgabe der Erfindung

Die Aufgabe der Erfindung besteht in der Bereitstellung einer Vorrichtung sowie einem Verfahren zum Herstellen eines Glasproduktes, welches die vorgenannten Schwächen des Standes der Technik zumindest mildert, insbesondere ein Verfahren zum Herstellen eines Glasprodukts, welches leichter weiterverarbeitbar ist, insbesondere ein Verfahren zum Herstellung eines Glasprodukts, welches das Auftreten von Knoten in einem Glasprodukt verhindert oder zumindest vermindert. Ein weiterer Aspekt der Erfindung besteht in der Bereitstellung eines Glasprodukts, welches als Halbzeug leichter zu einem Endprodukt verarbeitbar ist.

### Zusammenfassung der Erfindung

Die Aufgabe der Erfindung wird gelöst durch den Gegenstand der unabhängigen Ansprüche. Spezielle und/oder bevorzugte Ausführungsformen finden sich in den abhängigen Ansprüchen.

Die Offenbarung betrifft eine Vorrichtung zum Herstellen eines Glasprodukts, umfassend
- einen Bereich zum Schmelzen, insbesondere zum Einschmelzen, einer Glasschmelze,
- insbesondere einen Bereich zum Läutern einer Glasschmelze,
- insbesondere einen Bereich zum Konditionieren einer Glasschmelze,
- einen Bereich zum Heißformgeben einer Glasschmelze unter Erhalt eines Glasprodukts sowie
- wenigstens eine als ein Rohr ausgebildete Überführungsvorrichtung, durch welche die Glasschmelze von einem Bereich der Vorrichtung in einen anderen Bereich der Vorrichtung überführt werden kann,
wobei das Rohr so ausgebildet ist, dass ein Teil des Rohrs durch eine Seitenwand eines Bereichs in die Glasschmelze hineinragt,
wobei die Länge des hineinragenden Teils, also des Teils des Rohres, welches innerhalb des betreffenden Bereichs in die Glasschmelze hineinragt, so gewählt ist, dass der Teil des Rohrs so weit hineinragt, dass weniger Fehlglas in das Rohr gelangt und in einen anderen Bereich der Vorrichtung überführt wird. Die Länge des hineinragenden Teils des Rohrs beträgt bevorzugt mindestens 25 mm, besonders bevorzugt mindestens 50 mm, und ist ganz besonders bevorzugt mindestens so groß ist wie der mittlere Außendurchmesser des Rohrquerschnitts, und beträgt vorzugsweise höchstens 500 mm.

Der hineinragende Teil des Rohrs ist dabei vom direkt darunterliegenden Innenboden der Vorrichtung in diesem Bereich um einen Abstand beabstandet, der mindestens so hoch ist, dass weniger Fehlglas in das Rohr gelangt und in einen anderen Bereich der Vorrichtung überführt wird, wobei bevorzugt der Abstand mindestens 50 mm beträgt, und besonders bevorzugt wenigstens um einen Faktor 1,5 größer ist als der mittlere Außendurchmesser des Rohrquerschnitts, wobei vorzugsweise der Abstand höchstens die Glasbadtiefe abzüglich des 1,5 fachen Außendurchmessers des Rohrquerschnitts vom Innenboden des Bereichs der Vorrichtung beträgt.

Insbesondere betrifft die vorliegende Offenbarung eine Vorrichtung umfassend
- einen Bereich zum Schmelzen, insbesondere zum Einschmelzen, einer Glasschmelze,
- insbesondere einen Bereich zum Läutern einer Glasschmelze,
- einen Bereich zum Konditionieren einer Glasschmelze,
- einen Bereich zum Heißformgeben einer Glasschmelze unter Erhalt eines Glasprodukts sowie
- wenigstens eine als ein Rohr ausgebildete Überführungsvorrichtung, durch welche die Glasschmelze von dem Bereich der Vorrichtung zum Konditionieren in den Bereich der Vorrichtung zum Heißformgeben überführt werden kann,
wobei das Rohr so ausgebildet ist, dass ein Teil des Rohrs durch eine Seitenwand des Bereichs der Vorrichtung zum Konditionieren in die Glasschmelze hineinragt,
wobei die Länge des hineinragenden Teils vorzugsweise so gewählt ist, dass der Teil des Rohrs so weit in den Bereich der Vorrichtung zum Konditionieren hineinragt, dass weniger Fehlglas in das Rohr gelangt und in den Bereich der Vorrichtung zum Heißformgeben überführt wird,
wobei bevorzugt die Länge des hineinragenden Teils des Rohrs mindestens 25 mm, besonders bevorzugt mindestens 50 mm beträgt und ganz besonders bevorzugt mindestens so groß ist, wie der mittlere Außendurchmesser des Rohrquerschnitts, und vorzugsweise höchstens 500 mm beträgt, und
wobei der hineinragende Teil des Rohrs vom direkt darunterliegenden Innenboden der Vorrichtung in dem Bereich der Vorrichtung zum Konditionieren um einen Abstand beabstandet ist, der mindestens so hoch ist, dass weniger Fehlglas in das Rohr gelangt und in den Bereich der Vorrichtung zum Heißformgeben überführt wird,
wobei bevorzugt der Abstand mindestens 50 mm beträgt und besonders bevorzugt wenigstens um einen Faktor 1,5 größer ist als der mittlere Außendurchmesser des Rohrquerschnitts, wobei bevorzugt der Abstand höchstens die Glasbadtiefe abzüglich des 1,5-fachen Außendurchmessers des Rohrquerschnitts vom Innenboden des Bereichs der Vorrichtung zum Konditionieren beträgt.

Alternativ oder zusätzlich kann die Vorrichtung ausgestaltet sein umfassend
- einen Bereich zum Schmelzen, insbesondere zum Einschmelzen, einer Glasschmelze,
- insbesondere einen Bereich zum Läutern einer Glasschmelze,
- insbesondere einen Bereich zum Konditionieren einer Glasschmelze,
- einen Bereich zum Heißformgeben einer Glasschmelze unter Erhalt eines Glasprodukts sowie
- wenigstens eine als ein Rohr ausgebildete Überführungsvorrichtung, durch welche die Glasschmelze von einem ersten Bereich der Vorrichtung in einen anderen Bereich der Vorrichtung überführt werden kann,
wobei das Rohr so ausgebildet ist, dass ein Teil des Rohrs durch eine Seitenwand eines Bereichs in die Glasschmelze hineinragt,
wobei die Länge des hineinragenden Teils des Rohrs mindestens 25 mm, bevorzugt mindestens 50 mm beträgt und besonders bevorzugt mindestens so groß ist wie der mittlere Außendurchmesser des Rohrquerschnitts, und vorzugsweise höchstens 500 mm beträgt, und
wobei der hineinragende Teil des Rohrs vom direkt darunterliegenden Innenboden der Vorrichtung in diesem Bereich um einen Abstand beabstandet ist, der mindestens 50 mm beträgt und bevorzugt wenigstens um einen Faktor 1,5 größer ist als der mittlere Außendurchmesser des Rohrquerschnitts, wobei bevorzugt der Abstand höchstens die Glasbadtiefe abzüglich des 1,5-fachen Außendurchmessers des Rohrquerschnitts vom Innenboden des Bereichs der Vorrichtung beträgt.

Eine solche Ausgestaltung einer Vorrichtung zum Herstellen eines Glasprodukts weist eine Reihe von Vorteilen auf.

Beispielsweise konnte hinsichtlich der sogenannten Verdampfungsknoten festgestellt werden, dass das diese Verdampfungsknoten bildende Verdampfungsfehlglas bei Schmelztemperatur eine höhere Dichte sowie eine höhere Viskosität als das die eigentliche Glasschmelze bildende Grundglas besitzt. Dies ist umso überraschender, als bei Raumtemperatur das Verdampfungsfehlglas eine geringere Dichte als das Grundglas aufweist.

Des Weiteren konnte festgestellt werden, dass trotz einer großen Verdampfungsrate an der Oberfläche der Glasschmelze sich nur eine sehr dünne Schicht von Verdampfungsfehlglas auf der Schmelzbadoberfläche befindet. Dies bedeutet, dass sich das Verdampfungsfehlglas also nicht an der Oberfläche des Schmelzbades zu einer dicken Schicht aufstaut.

Vielmehr bewegt sich das an der Oberfläche des Schmelzbades gebildete Verdampfungsfehlglas mit der Strömung der Oberfläche auf die die Vorrichtung begrenzende Wände zu und bildet dort einen Belagsfilm von Knotenglas. Dieser Belagsfilm bewegt sich aufgrund seiner im Vergleich mit der Grundglasschmelze höheren Dichte an der Wandung der Vorrichtung nach unten zum Innenboden der Vorrichtung hin. Es wurde herausgefunden, dass dieser Film eine Dicke von mehreren Millimetern aufweisen kann. Am Boden der Vorrichtung zum Herstellen eines Glasprodukts, also beispielsweise am Boden einer sogenannten Schmelzwanne, bildet sich aufgrund dieser Abströmung eine Ablagerung von Verdampfungsfehlglas in Form einer Bodenschicht in einem Bereich einer Vorrichtung zum Herstellen eines Glasprodukts, wie beispielsweise einem Schmelzbecken.

Diese Ablagerung von Fehlglas kann also als Glas verstanden werden, welches sich in seiner Zusammensetzung von der des Grundglases unterscheidet und beispielsweise als Rückstand des Grundglases resultierend aus beispielsweise einem Verdampfungsprozess entstanden ist.

Als zweiter Prozess der Knotenbildung kann die Feuerfestkorrosion, also die Korrosion des Feuerfestmaterials, verstanden werden. Im Rahmen der vorliegenden Offenbarung werden dabei als Feuerfestmaterialien keramische Materialien bezeichnet, welche eine hohe Temperaturbeständigkeit aufweisen, insbesondere eine Temperaturbeständigkeit von mehr als 1000°C. Solche Materialien werden beispielsweise in Vorrichtungen zum Schmelzen von Glas eingesetzt und beispielsweise auch als Wannensteine bezeichnet.

Die Feuerfestkorrosion bezeichnet hier die Reaktion des Feuerfestmaterials mit den das Feuerfestmaterial umgebenden Materialien, hier also insbesondere die Reaktion des Feuerfestmaterials mit einer Glasschmelze. In der Folge dieser Reaktion kann es zu einem Abbau des Feuerfestmaterials kommen. Insbesondere bildet sich eine Reaktionsschicht zwischen Glasschmelze - beispielsweise auch der Verdampfungsfehlglasschmelze - und dem Feuerfestmaterial. Dabei kann es zu einem Austrag von festen Partikeln aus dem Feuerfestmaterial kommen. Dieser Austrag, also die aus dem Feuerfestverband herausgelösten Partikeln, haben typischerweise ebenfalls eine höhere Dichte als das Grundglas und bewegen sich an der Wand der Vorrichtung gleichfalls nach unten. Die aus dem Feuerfestmaterial ausgetragenen Partikel können ebenfalls zumindest teilweise angelöst und/oder glasig umgewandelt vorliegen und werden im Rahmen der vorliegenden Offenbarung ebenfalls als Knoten bezeichnet, also als zumindest hochviskose und zumindest teilweise glasartige oder glasige Glasfehler. Dieses glasige oder zumindest glasartige Material wird auch als Feuerfestfehlglas bezeichnet.

In der Vorrichtung zum Herstellen eines Glasprodukts bildet sich somit eine Ablagerung in Form einer Bodenschicht in der Vorrichtung zur Herstellung eines Glasprodukts, wie beispielsweise einem Schmelzbecken, also ein Bereich innerhalb der Vorrichtung, welcher Fehlglas, wie beispielsweise Verdampfungsfehlglas und/oder korrodiertes, insbesondere zumindest teilweise glasiges und/oder glasartiges Feuerfestmaterial, also Feuerfestfehlglas, umfasst. Dieser Bereich ist in der Regel am Boden der Vorrichtung zum Herstellen eines Glasprodukts, beispielsweise am Boden eines Schmelzaggregats, wie einer Schmelzwanne, angeordnet.

Unter einem Fehlglas wird im Rahmen der vorliegenden Offenbarung also ein Glas verstanden, welches in seiner Zusammensetzung von der Zusammensetzung des Grundglases, also des zur Herstellung des Glasprodukts adressierten Glases einer gewünschten Zusammensetzung, abweicht. In einem engeren Sinne kann darunter auch verstanden werden, dass es sich nicht nur um Glas einer von der gewünschten herzustellenden Glaszusammensetzung abweichenden Zusammensetzung handelt, sondern auch um ein Glas, welches im Glasherstellungsprozess, beispielsweise aufgrund der abweichenden Zusammensetzung, zur Ausbildung von Glasfehlern im resultierenden Glasprodukt führt. Eine besondere Form des Fehlglases ist daher insbesondere das Knotenglas, welches nicht nur eine von der Zusammensetzung des eigentlich adressierten und herzustellenden Glases abweichende Zusammensetzung aufweist, sondern auch zur Ausbildung von Knoten als Glasfehler in dem Glasprodukt führt.

Im Rahmen der vorliegenden Offenbarung wird das eigentlich adressierte und herzustellende Glas in Abgrenzung zum Fehlglas auch als Gutglas bezeichnet.

Im Bereich der Bodenschicht bildet sich die Ablagerung aus. Es handelt sich hierbei um ein Material, welches sich als Rückstand des Herstellprozesses für ein Glasprodukt insbesondere im Bodenbereich einer Vorrichtung zum Herstellen eines Glasprodukts, beispielsweise also am Boden einer Schmelzwanne, bildet oder bilden kann. Die Ablagerung kann neben Fehlglas, beispielsweise Knotenglas, auch weitere Bestandteile umfassen, beispielsweise nicht aufgeschmolzene Gemengerückstände.

In der Regel besteht die Ablagerung in einer Vorrichtung zum Herstellen eines Glasprodukts, wie einer Schmelzwanne, aus einer Mischung von Verdampfungsfehlglas und Korrosionsprodukten des Feuerfestmaterials, also Feuerfestfehlglas. Jedoch kann diese Ablagerung auch ohne den Prozess der Verdampfung und der entsprechend resultierenden Entstehung von Verdampfungsfehlglas nur aus korrodiertem Feuerfestmaterial, also dem Feuerfestfehlglas, gebildet werden. Welche Zusammensetzung die Ablagerung aufweist und ob beispielsweise Verdampfungsfehlglas gebildet wird, hängt dabei insbesondere von der Zusammensetzung des Grundglases ab.

Glasschmelzen, die besonders aggressiv sind, und daher insbesondere zur Ausbildung von Knoten aus oder umfassend Feuerfestfehlglas neigen, sind beispielsweise alkalifreie Gläser. Glasschmelzen, welche insbesondere anfällig für Verdampfung sind, und daher besonders zur Ausbildung von Verdampfungsfehlglas neigen, sind insbesondere Bor umfassende Gläser, wie beispielsweise Borosilikatgläser.

Vorrichtungen zum Herstellen eines Glasprodukts sind so ausgebildet, dass das Glas, beispielsweise in schmelzflüssiger Form, von einem Bereich der Vorrichtung in einen anderen gelangen kann. Insbesondere umfasst eine solche Vorrichtung also mindestens eine Überführungsvorrichtung.

Ist die Vorrichtung nun so ausgebildet, dass die Überführungsvorrichtung, welche beispielsweise als Entnahmeöffnung ausgebildet sein kann, also beispielsweise in dem Bereich angeordnet sein kann, in welchem die Glasschmelze aus dem Schmelzaggregat selbst in den Bereich der Heißformgebung geführt wird, sehr nahe an der Feuerfestbegrenzung des Schmelzaggregat befindet, dann wird beispielsweise die abströmende Wandschicht aus Verdampfungsfehlglas und Feuerfestfehlglas in die Überführungsvorrichtung gerissen. In der Folge entstehen feste bzw. hochviskose Glasfehler, also Knoten. Diese können auch im weiteren Schmelzprozess nicht mehr in das Grundglas aufgelöst werden.

Gemäß der vorliegenden Offenbarung ist nun diese Überführungsvorrichtung in Form eines Rohres ausgebildet. Durch diese Ausbildung der Überführungsvorrichtung als Rohr wird gezielt die Einsaugung hochviskoser Knotenglasströme vermieden oder zumindest vermindert.

Um dies zu erzielen, muss allerdings das Rohr mit einer gewissen Mindestlänge in die Glasschmelze hineinragen. Weiterhin ist es erforderlich, dass die Überführungsvorrichtung in Form eines Rohres einen gewissen Mindestabstand zum Boden einhält.

Dies ist notwendig, damit die Überführungsvorrichtung auch in den Bereich der Glasschmelze hineinragt, in welchem die Glasschmelze die Zusammensetzung des Grundglases aufweist, also in den Bereich, welcher außerhalb der Knotenglasströmung liegt. Weiterhin ist der Mindestabstand zum Innenboden der Vorrichtung zum Herstellen eines Glasprodukts erforderlich, um oberhalb der Bodenschicht umfassend die Ablagerung zu bleiben, also oberhalb des Bereichs der Vorrichtung, in welchem sich eine Glasschmelze befindet, deren chemische Zusammensetzung sich von der des Grundglases unterscheidet. Dies wird gemäß der vorliegenden Offenbarung in einem ersten Fall dadurch erzielt, dass
- die Länge des Teils des Rohres, welches in die Glasschmelze hineinragt, so gewählt wird, dass der Teil des Rohres so weit in den Bereich hineinragt, dass weniger Fehlglas in das Rohr gelangt und in einen anderen Bereich der Vorrichtung überführt wird, wobei bevorzugt die Länge des Teils der Rohrs mindestens 25 mm, besonders bevorzugt mindestens 50 mm beträgt und ganz besonders bevorzugt mindestens so groß ist wie der mittlere Außendurchmesse des Rohrquerschnitts, und vorzugsweise höchstens 500 mm beträgt, und
- der Teil des Rohrs, welcher in den betreffenden Bereich der Vorrichtung zum Herstellen eines Glasprodukts hineinragt, von direkt darunterliegenden Innenboden der Vorrichtung in diesem Bereich bevorzugt um einen Abstand von mindestens 50 mm, vorzugsweise um einen Abstand, der wenigstens einen Faktor 1,5 größer ist als der mittlere Außendurchmesser des Rohrquerschnitts, beabstandet ist, wobei vorzugsweise der Abstand höchstens die Glasbadtiefe abzüglich des 1,5-fachen Außendurchmessers der Rohrquerschnitts von Innenboden des betreffenden Bereichs der Vorrichtung beträgt.

Weiterhin ist gemäß diesem ersten Fall die Überführungsvorrichtung so angeordnet, dass sie Glas von dem Bereich der Vorrichtung zum Konditionieren in den Bereich der Vorrichtung zum Heißformgeben überführt.

Dies war so bisher im Stand der Technik nicht vorgesehen. Denn im Stand der Technik, wie vorstehend ausgeführt, wurde davon ausgegangen, dass gerade der Bereich zum Schmelzen einer Glasschmelze der Ursprung von Knoten ist.

Dies bedeutet, dass diese Einragung der als Rohr ausgebildeten Überführungsvorrichtung zwischen dem Bereich der Vorrichtung zum Konditionieren nach dem ersten Fall ein wesentlicher Aspekt der Vorrichtung nach der vorliegenden Offenbarung ist.

Nur durch eine ausreichende Einragung in einer ausreichenden Höhe der Seitenwand auch und gerade zwischen dem Bereich der Vorrichtung zum Konditionieren (auch als "Arbeitswanne" bezeichnet) und dem Bereich der Vorrichtung zum Heißformgeben kann nämlich sichergestellt werden, dass der Eintrag an Knotenglas und mithin die Erzeugung von Glasfehlern im Glasprodukt aufgrund von Knoten durch die Überführungsvorrichtung von einem Bereich einer Vorrichtung zum Herstellen eines Glasprodukts in einen anderen Bereich dieser Vorrichtung, also beispielsweise von einem Bereich eines Glasschmelzaggregats in einen anderen Bereich dieses Aggregats, hier nämlich nach dem ersten Fall der Erfindung vom Bereich der Vorrichtung zum Konditionieren in den Bereich der Vorrichtung zum Heißformgeben, ausgeschlossen oder zumindest gemindert wird.

Ist die Einragung jedoch zu kurz und/oder nicht ausreichend hoch an der Seitenwand angeordnet, wird entweder der Eintrag des Knotenglases nicht sicher verhindert und/oder die Umgebung des Rohres wird aufgrund einer parasitären Nebenströmung der Glasschmelze sehr stark korrodiert.

Gemäß dem zweiten Fall nach der vorliegenden Offenbarung wird eine Verminderung von Knoten in einem Glasprodukt entsprechend dadurch erzielt, dass
- die Länge des Teils des Rohres, welches in die Glasschmelze hineinragt, so gewählt wird, dass der Teil des Rohres so weit in den Bereich hineinragt, dass weniger Fehlglas in das Rohr gelangt und in einen anderen Bereich der Vorrichtung überführt wird, wobei bevorzugt die Länge des Teils der Rohrs mindestens 25 mm, besonders bevorzugt mindestens 50 mm beträgt und ganz besonders bevorzugt mindestens so groß ist wie der mittlere Außendurchmesse des Rohrquerschnitts, und vorzugsweise höchstens 500 mm beträgt, und
- der Teil des Rohrs, welcher in den betreffenden Bereich der Vorrichtung zum Herstellen eines Glasprodukts hineinragt, von direkt darunterliegenden Innenboden der Vorrichtung in diesem Bereich um einen Abstand von mindestens 50 mm, vorzugsweise um einen Abstand, der wenigstens einen Faktor 1,5 größer ist als der mittlere Außendurchmesser des Rohrquerschnitts, beabstandet ist, wobei vorzugsweise der Abstand höchstens die Glasbadtiefe abzüglich des 1,5-fachen Außendurchmessers der Rohrquerschnitts von Innenboden des betreffenden Bereichs der Vorrichtung beträgt.

Dies bedeutet, dass gerade in der Kombination der Merkmale einer gewissen, jedoch letztlich nicht zu großen, sondern maximale 500 mm langen, Einragung eines Rohrs in einer gewissen Höhe einer Seitenwand ein wesentlicher Aspekt nach dem zweiten Fall zu sehen ist. Denn in diesem Fall wird das wirksame Schmelzvolumen nicht zu stark vermindert. Das Einsaugen einer Randschicht von Fehlglas durch die Abwärtsströmung an der Seitenwand wird durch eine solche Anordnung zumindest gemindert, wenn nicht sogar ganz verhindert. Gleichzeitig ist es bei einer solchen Anordnung auch möglich, recht große Rohrdurchmesser zu wählen. Damit wird gleichzeitig eine hohe Überführungseffizienz gewährleistet.

Beispielhaft kann für einen Außendurchmesser von 100 mm eines Rohrs die Höhe, in welcher das Rohr eingebaut ist, zwischen 150 mm und 750 mm liegen. Die Länge des einragenden Teils beträgt bis höchstens 150 mm und ist somit wesentlich geringer als nach dem Stand der Technik. Eine solche Merkmalskombination war nach dem Stand der Technik nicht vorgesehen. Denn nach dem Stand der Technik musste davon ausgegangen werden, dass eine sehr große Einragung notwendig ist. Weiterhin sollte das Rohr möglichst im Bodenbereich angeordnet sein.

Der mittlere Außendurchmesser des Rohrquerschnitts beschreibt im Rahmen der vorliegenden Offenbarung die Abmessungen des Rohrs in den beiden Raumrichtungen eines kartesischen Koordinatensystems, die senkrecht zur größten lateralen Abmessung des Rohres, also senkrecht zu Länge des Rohrs, angeordnet sind.

Das Rohr kann gemäß der vorliegenden Offenbarung einen fast beliebig ausgebildeten Querschnitt aufweisen, also beispielsweise einen runden, einen ovalen, einen eckigen und/oder einen spitzdachförmigen Querschnitt. Weiterhin ist es auch möglich, dass sich der Außenquerschnitt des Rohres vom Innenquerschnitt unterscheidet, also beispielsweise die äußeren Umrisse des Rohres die Form eines Dreiecks annehmen, jedoch der innere Querschnitt des Rohres, also der Teil des Rohres, durch welchen die Glasschmelze tatsächlich von einem Bereich der Vorrichtung zum Herstellen eines Glasprodukts in einen anderen Bereich der Vorrichtung gelangt, einen runden Querschnitt aufweist.

Sofern das Rohr einen von einer Kreisform abweichenden Außenquerschnitt aufweist, beschreibt der mittlere Außendurchmesser des Rohrquerschnitts im Rahmen der vorliegenden Offenbarung den Durchmesser, welcher dem Durchmesser eines Kreises mit einer identischen Außenquerschnittsfläche des Rohres entspricht. Weiterhin sollen sich die Länge der umschreibenden Hauptachsen der gewählten Bauform nicht mehr als um den Faktor 2 unterscheiden.

Es hat sich gezeigt, dass Knotenglas in einer Vorrichtung zum Herstellen eines Glasprodukts insbesondere in dem Bereich zum Läutern einer Glasschmelze und dem Bereich zum Konditionieren einer Glasschmelze gebildet wird.

### Gemäß einer Ausführungsform der Vorrichtung

- ist das Rohr in einer Seitenwand der Vorrichtung zwischen dem Bereich zum Läutern und dem Bereich zum Konditionieren der Glasschmelze angeordnet, wobei ein Teil des Rohrs in den Bereich zum Läutern hineinragt, sodass Glasschmelze vom dem Bereich zum Läutern in den Bereich zum Konditionieren überführt wird oder überführt werden kann, und/oder
- ist das Rohr in einer Seitenwand der Vorrichtung zwischen dem Bereich zum Konditionieren und dem Bereich zum Heißformgeben der Glasschmelze angeordnet, sodass Glasschmelze von dem Bereich zum Konditionieren in den Bereich zum Heißformgeben überführt wird oder überführt werden kann,
wobei der hineinragende Teil des Rohrs durch die Seitenwand der Vorrichtung in den jeweiligen Bereich der Vorrichtung zum Läutern und/oder Konditionieren hineinragt.

Durch diese räumliche Ausgestaltung der Vorrichtung, insbesondere also die Anordnung der Überführungsvorrichtung in Form eines Rohres zwischen bestimmten Bereichen der Vorrichtung, kann die Überführung von knotenartigen Glasfehlern in das Glasprodukt auf besonders effiziente Weise gemindert werden.

Gemäß einer weiteren Ausführungsform der Vorrichtung zum Herstellen eines Glasprodukts ist das Rohr so ausgebildet, dass sich der mittlere Innendurchmesser des Rohrquerschnitts in Fließrichtung der Glasschmelze hin verjüngt.

Eine solche Ausgestaltung der Vorrichtung zum Herstellen eines Glasprodukts ist vorteilhaft, weil auf diese Weise Umbau- oder Wartungsmaßnahmen an der Vorrichtung leichter vorgenommen werden können. Insbesondere kann mit einer solchen Ausgestaltung des Rohres mit sich in Fließrichtung der Glasschmelze verjüngenden Querschnitt ein Herausdrücken des eingefrorenen Glaspostens bei einem Rinnenwechsel und/oder bei einem Wechsel weiterer Bauteile, beispielsweise Edelmetall umfassender Bauteile eines Schmelzaggregates, vermeiden.

Gemäß einer weiteren Ausführungsform der Vorrichtung zum Herstellen eines Glasprodukts umfasst das Rohr ein Feuerfestmaterial und/oder ein Edelmetall und/oder ein Refraktärmetall.

Unter einem Refraktärmetall wird im Rahmen der vorliegenden Offenbarung ein unedles, hochtemperaturstabiles Metall verstanden. Beispiele für solche Refraktärmetalle sind beispielsweise Wolfram, oder Molybdän. Als hochtemperaturstabil wird im Rahmen der vorliegenden Offenbarung ein Metall bezeichnet, welches einen Schmelzpunkt von mehr als 2000°C aufweist.

Besteht das Rohr aus Feuerfestmaterial oder einem Refraktärmetall, welches nicht dauerhaft stabil ist gegenüber der Korrosion durch die Glasschmelze, so ist mindestens der Teil, welcher im direkten Kontakt mit der Glasschmelze steht, bevorzugt das ganze Rohr, mit einem Edelmetall umfassenden Material ummantelt. Die Umfassung besteht in diesem Fall sowohl auf der Außenseite, der Stirnseite als auch der Innenseite des Rohres. Diese Ummantelung kann zum Beispiel in Platin und allen seine in der Glasanwendung üblich verwendeten Legierungen wie beispielsweise mit Rhodium, oder Dispersionen wie beispielsweise mit ZrO₂ dispergiertes Platin oder in Iridium mit entsprechenden Legierungen ausgeführt sein.

Gemäß einer nochmals weiteren Ausführungsform der Vorrichtung zum Herstellen eines Glasprodukts befindet sich in dem Bereich der Vorrichtung, innerhalb dessen das Rohr angeordnet ist, unterhalb des Rohrs ein Bodenablauf, welcher geöffnet werden kann, sodass angesammelte Ablagerung eines Fehlglases abgezogen werden kann, wobei der Bodenablauf und/oder das Rohr in jedem Bereich der Vorrichtung zum Herstellen eines Glasprodukts angeordnet sein können und bevorzugt in dem Bereich zum Heißformgeben angeordnet sind.

Durch eine solche Ausgestaltung kann der Gehalt der Glasschmelze an störenden Bestandteilen, wie beispielsweise an Fehlglas, weiter vermindert werden. Durch die allgemeine Verringerung des Fehlglasgehalts vermindert sich in entsprechender Weise auch die Ausbildung von Knoten im resultierenden Glasprodukt.

Gemäß einer nochmals weiteren Ausführungsform der Vorrichtung zum Herstellen eines Glasprodukts ist die Vorrichtung ausgelegt zur Heißformgebung eines Glases umfassend Rohrzug, beispielsweise im Vello-, Danner- und/oder Down-Draw-Verfahren, oder Flachglasheißformgebung, beispielsweise Walzen oder Floaten oder Ziehen, wie beispielsweise Ziehen in einem Down-Draw-Verfahren oder in einem Overflow-Fusion-Verfahren.

Ein weiterer Aspekt der vorliegenden Offenbarung betrifft ein Verfahren zum Herstellen eines Glasprodukts. Das Verfahren umfasst die Schritte
- des Schmelzens, vorzugsweise des Einschmelzens, einer Glasschmelze,
- insbesondere des Läuterns der Glasschmelze,
- insbesondere des Konditionierens der Glasschmelze,
- des Heißformgebens der Glasschmelze unter Erhalt eines Glasprodukts,
wobei wenigstens einer der Verfahrensschritte in einer Vorrichtung zum Herstellen eines Glasprodukts, welche ein Rohr, welches ausgelegt ist, die Glasschmelze von einem Bereich der Vorrichtung in einen anderen Bereich zu überführen, umfasst, durchgeführt wird, und
wobei das Rohr so ausgebildet ist, dass ein Teil des Rohrs mit einer Länge durch eine Seitenwand eines Bereichs in die Glasschmelze hineinragt,
wobei die Länge des hineinragenden Teils so gewählt ist, dass der Teil des Rohrs so weit in den Bereich hineinragt, dass weniger Fehlglas in das Rohr gelangt und in einen anderen Bereich der Vorrichtung überführt wird, wobei bevorzugt die Länge des hineinragenden Teils des Rohrs mindestens 25 mm, besonders bevorzugt mindestens 50 mm beträgt und ganz besonders bevorzugt mindestens so groß ist, wie der mittlere Außendurchmesser des Rohrquerschnitts, und vorzugsweise höchstens 500 mm beträgt,
und wobei der hineinragende Teil des Rohrs vom direkt darunterliegenden Innenboden der Vorrichtung in diesem Bereich um einen Abstand beabstandet ist, der mindestens so hoch ist, dass weniger Fehlglas in das Rohr gelangt und in einen anderen Bereich der Vorrichtung überführt wird, wobei bevorzugt der Abstand mindestens 50 mm beträgt und besonders bevorzugt wenigstens um einen Faktor 1,5 größer ist als der mittlere Außendurchmesser des Rohrquerschnitts, wobei vorzugsweise der Abstand höchstens die Glasbadtiefe abzüglich des 1,5-fachen Außendurchmessers des Rohrquerschnitts vom Innenboden des Bereichs der Vorrichtung beträgt,
sodass in wenigstens einem der Verfahrensschritte Glasschmelze von wenigstens einem Bereich der Vorrichtung durch das Rohr in einen anderen Bereich der Vorrichtung gelangt.

Insbesondere kann gemäß einer Ausführungsform des Verfahrens dieses so ausgestaltet sein, dass es umfasst
die Schritte des
- Schmelzens, bevorzugt des Einschmelzens, einer Glasschmelze,
- insbesondere des Läuterns der Glasschmelze,
- des Konditionierens der Glasschmelze,
- Heißformgebens der Glasschmelze unter Erhalt eines Glasprodukts,
wobei wenigstens einer der Verfahrensschritte in einer Vorrichtung zum Herstellen eines Glasprodukts, welche ein Rohr, welches ausgelegt ist, die Glasschmelze von einem Bereich der Vorrichtung in einen anderen Bereich zu überführen, umfasst, durchgeführt wird, und
wobei das Rohr so ausgebildet ist, dass ein Teil des Rohrs mit einer Länge durch eine Seitenwand eines Bereichs der Vorrichtung zum Konditionieren in die Glasschmelze hineinragt,
wobei die Länge des hineinragenden Teils so gewählt ist, dass der Teil des Rohrs so weit in den Bereich der Vorrichtung zum Konditionieren hineinragt, dass weniger Fehlglas in das Rohr gelangt und in den Bereich der Vorrichtung zum Heißformgeben überführt wird, wobei bevorzugt die Länge des hineinragenden Teils des Rohrs mindestens 25 mm, besonders bevorzugt mindestens 50 mm beträgt und ganz besonders bevorzugt mindestens so groß ist, wie der mittlere Außendurchmesser des Rohrquerschnitts, und vorzugsweise höchstens 500 mm beträgt,
und wobei der hineinragende Teil des Rohrs vom direkt darunterliegenden Innenboden der Vorrichtung in dem Bereich der Vorrichtung zum Konditionieren um einen Abstand beabstandet ist, der mindestens so hoch ist, dass weniger Fehlglas in das Rohr gelangt und in den Bereich der Vorrichtung zum Heißformgeben überführt wird, wobei bevorzugt der Abstand mindestens 50 mm beträgt und besonders bevorzugt wenigstens um einen Faktor 1,5 größer ist als der mittlere Außendurchmesser des Rohrquerschnitts wobei vorzugsweise der Abstand höchstens die Glasbadtiefe abzüglich des 1,5-fachen Außendurchmessers des Rohrquerschnitts vom Innenboden des Bereichs der Vorrichtung zum Konditionieren beträgt,
sodass in wenigstens einem der Verfahrensschritte Glasschmelze von wenigstens den ersten Bereich der Vorrichtung durch das Rohr in den Bereich der Vorrichtung zum Heißformgeben gelangt.

Alternativ oder zusätzlich kann das Verfahren so ausgestaltet sein, dass es umfasst die Schritte des
- Schmelzens, bevorzugt des Einschmelzens, einer Glasschmelze,
- insbesondere des Läuterns der Glasschmelze,
- insbesondere des Konditionierens der Glasschmelze,
- Heißformgebens der Glasschmelze unter Erhalt eines Glasprodukts,
wobei wenigstens einer der Verfahrensschritte in einer Vorrichtung zum Herstellen eines Glasprodukts, welche ein Rohr, welches ausgelegt ist, die Glasschmelze von einem Bereich der Vorrichtung in einen anderen Bereich zu überführen, umfasst, durchgeführt wird, und
wobei das Rohr so ausgebildet ist, dass ein Teil des Rohrs mit einer Länge durch eine Seitenwand eines Bereichs in die Glasschmelze hineinragt,
wobei die Länge des hineinragenden Teils des Rohrs mindestens 25 mm, bevorzugt mindestens 50 mm beträgt und besonders bevorzugt mindestens so groß ist wie der mittlere Außendurchmesser des Rohrquerschnitts, und vorzugsweise höchstens 500 mm beträgt,
und wobei der hineinragende Teil des Rohrs vom direkt darunterliegenden Innenboden der Vorrichtung in diesem Bereich um einen Abstand beabstandet ist, der mindestens 50 mm beträgt und bevorzugt wenigstens um einen Faktor 1,5 größer ist als der mittlere Außendurchmesser des Rohrquerschnitts, wobei bevorzugt der Abstand höchstens die Glasbadtiefe abzüglich des 1,5-fachen Außendurchmessers des Rohrquerschnitts vom Innenboden des Bereichs der Vorrichtung beträgt,
sodass in wenigstens einem der Verfahrensschritte Glasschmelze von wenigstens einem Bereich der Vorrichtung durch das Rohr in einen anderen Bereich der Vorrichtung gelangt.

Als maximale Höhe kann das Rohr also einen halben Außendurchmesser des Rohrquerschnitts unter der Glasbadlinie liegen.

Ein nochmals weiterer Aspekt betrifft ein Glasprodukt, vorzugsweise hergestellt oder herstellbar in einem Verfahren nach der vorliegenden Offenbarung und/oder in einer Vorrichtung nach Ausführungsformen der vorliegenden Offenbarung, wobei das Glasprodukt so ausgestaltet ist, dass es keine Knoten mit einem Durchmesser von mehr als 1,5 mm auf eine Palette Glas umfasst, bevorzugt keine Knoten mit einem Durchmesser von 1,2 mm auf eine Palette Glas, besonders bevorzugt keine Knoten mit einem Durchmesser von 1,0 mm auf eine Palette Glas, mehr bevorzugt keine Knoten mit einem Durchmesser von mehr als 0,9 mm auf eine Palette Glas und ganz besonders bevorzugt keine Knoten mit einem Durchmesser von mehr als 0,8 mm auf eine Palette Glas..

Im Rahmen der vorliegenden Offenbarung wird unter einer Palette Glas eine Palette eines Glasprodukts verstanden. Das Gewicht der Palette Glas variiert dabei je nach dem genauen Format des palettierten Glasprodukts, beträgt in der Regel aber zwischen minimal etwa 900 kg und maximal etwa 1100 kg, vorzugsweise zwischen 950 kg und 1050 kg, also etwa 1t.

Gemäß einer weiteren Ausführungsform umfasst das Glasprodukt weniger als 3,4 Knoten pro Kilogramm Glas mit einem Durchmesser von mehr als 0,5 mm und bis höchstens 0,8 mm, bevorzugt weniger als 3,3 Knoten pro Kilogramm Glas, mehr bevorzugt weniger als 3,2 Knoten pro Kilogramm Glas und ganz besonders bevorzugt weniger als 3 Knoten pro Kilogramm Glas.

Im Rahmen der vorliegenden Offenbarung wird unter einem Durchmesser eines Teilchens, wie eines Einschlusses in einer Schmelze, der Äquivalentdurchmesser verstanden.

Im Prozess der Glasformung ziehen sich Einschlüsse aus, wodurch im Regelfall ein Kern und einen diesen Kern umgebende pseudo-elliptische oder schlierenartige Ausformungen auftreten. Sofern im Rahmen der vorliegenden Offenbarung auf den Durchmesser bzw. mittleren Durchmesser bzw. Äquivalentdurchmesser eines Knotens abgestellt wird, bezieht sich die Angabe dieser Abmessung auf den Kern des Knotens, also ohne Berücksichtigung der diesen Kern umgebenden Ausformungen.

Das Glasprodukt nach Ausführungsformen der vorliegenden Offenbarung kann beispielsweise ein Glasrohr oder ein Glasstab sein.

### Beschreibung der Zeichnungen

Im Folgenden wird die Erfindung anhand von Zeichnungen weiter erläutert.

Es zeigen
- Fig. 1 bis 4: schematische und nicht maßstabsgetreue Darstellungen eines Teils einer Vorrichtung gemäß Ausführungsformen der Vorrichtung,
- Fig. 5: eine schematische und nicht maßstabsgetreue Darstellung einer Überführungsvorrichtung in einer Seitenwand einer Ausführungsform einer Vorrichtung,
- Fig. 6: eine skizzenhafte Darstellung des Fehlglases in einer Vorrichtung zum Herstellen eines Glasprodukts bei unterschiedlichen Ausführungen einer Überführungsvorrichtung, sowie
- Fig. 7: eine skizzenhafte Darstellung eines Knotens in einem Glasprodukt.

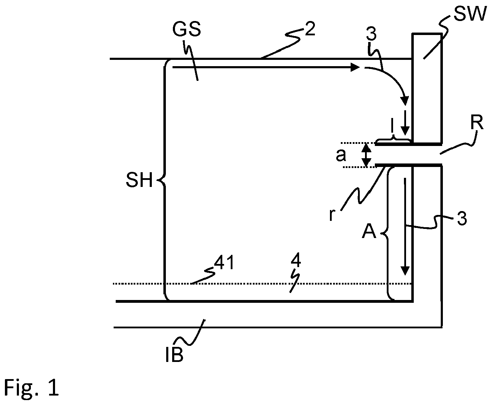

Fig. 1 zeigt eine schematische Darstellung eines Teils einer Vorrichtung 1 zum Herstellen eines Glasprodukts nach einer Ausführungsform. Dargestellt ist ein Teil einer Vorrichtung 1, in welcher eine Glasschmelze GS vorhanden ist. Diese weist einen Glasspiegel 2 auf, welcher die Höhe SH der Glasschmelze GS in der Vorrichtung 1 wiedergibt. Die Glasschmelze GS zeigt eine Konvektionsströmung 3, welche vorliegend in Fig. 1 schematisch in Form von Pfeilen, die die Konvektionsrichtung in der Glasschmelze GS zeigen, dargestellt ist. Die Vorrichtung 1 weist eine Seitenwand SW auf, in welcher eine Überführungsvorrichtung in Form eines Rohres R angeordnet ist. Durch die als Rohr R ausgebildete Überführungsvorrichtung kann Glasschmelze GS aus einem Bereich der Vorrichtung 1 in einen weiteren Bereich (nicht dargestellt) der Vorrichtung 1 überführt werden.

Das Rohr R ist so ausgebildet, dass ein Teil r des Rohrs R durch die Seitenwand SW eines Bereichs der Vorrichtung 1 in die Glasschmelze GS hineinragt. Die Länge l des hineinragenden Teils r ist so gewählt, dass der Teil r des Rohrs R so weit in den Bereich hineinragt, dass weniger Fehlglas in das Rohr R gelangt und in einem anderen Bereich der Vorrichtung 1 überführt wird. Vorteilhaft beträgt die Länge l des hineinragenden Teils r des Rohrs R mindestens 25 mm, vorzugsweise mindestens 50 mm und ist besonders bevorzugt mindestens so groß wie der mittlere Außendurchmesser a des Rohrquerschnitts. Vorzugsweise beträgt die Länge l des Teils r des Rohrs R höchstens 500 mm. Zur besseren Darstellung wurde hierbei der Teil r sehr lang im Vergleich zur Gesamtlänge des Rohrs R dargestellt. Es handelt sich hierbei, wie vorstehend ausgeführt, jedoch lediglich um eine schematische Darstellung.

Weiterhin kann Fig. 1 entnommen werden, dass der Teil r des Rohrs R vom direkt darunterliegenden Innenboden IB der Vorrichtung 1 in diesem Bereich um einen Abstand A beabstandet ist. Dieser Abstand A ist mindestens so hoch, dass weniger Fehlglas in das Rohr R gelangt und in einen anderen Bereich der Vorrichtung 1 überführt wird. Bevorzugt beträgt der Abstand A mindestens 50 mm und ist besonders bevorzugt wenigstens um einen Faktor 1,5 größer als der mittlere Außendurchmesser a des Querschnitts des Rohres R, wobei besonders bevorzugt der Abstand A höchstens die Glasbadtiefe T abzüglich des 1,5-fachen Außendurchmesser a des Rohrquerschnitts, gemessen vom Innenboden IB des jeweiligen Bereichs der Vorrichtung 1 beträgt.

Ein solcher Abstand A ist vorteilhaft, um sicherzustellen, dass das Rohr höher angeordnet ist als der Spiegel 41 der Bodenschicht 4. Die Bodenschicht 4 umfasst nämlich Ablagerung, also umfasst beispielsweise Fehlglas. Der Abstand A sollte also so groß gewählt sein, dass er oberhalb des Spiegels 41 der Bodenschicht 4 liegt.

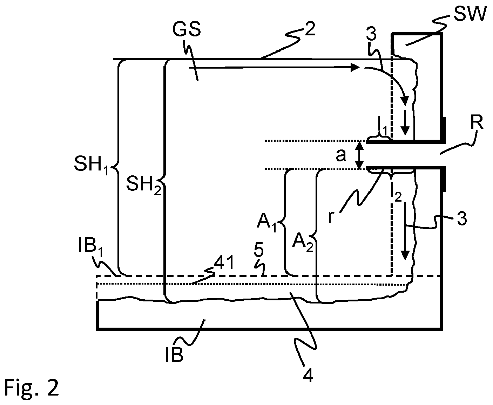

Fig. 2 zeigt in schematischer und nicht maßstabsgetreuer Darstellung einen Teil einer Vorrichtung 1 nach einer weiteren Ausführungsform. Dargestellt ist hier ein Teil einer Vorrichtung 1, bei welcher die Feuerfestmaterial umfassenden Wände der Vorrichtung, beispielsweise die Seitenwand SW, bereits einer gewissen Korrosion ausgesetzt waren. Infolgedessen hat die Dicke der Seitenwand SW im Bereich unterhalb des Glasspiegels 2 abgenommen. Weiterhin dargestellt ist das ursprüngliche Niveau 5 des Innenbodens. Durch die Feuerfestkorrosion ist dieses ursprüngliche Niveau des Innenbodens jedoch erodiert und der Innenboden IB der Vorrichtung 1 in dem hier dargestellten Bereich liegt nunmehr tiefer.

Die Feuerfestkorrosion hat für die Vorrichtung 1, von der hier ein Teil dargestellt ist, zu Folge, dass das als Überführungsvorrichtung ausgebildete Rohr R nunmehr weiter in die Glasschmelze GS hineinragt, als dies vor der Feuerfestkorrosion der Fall war. In diesem Fall kann also das Rohr R folgendermaßen charakterisiert werden:
Es weist einen Teil r auf, welcher in die Glasschmelze GS in einem Bereich der Vorrichtung 1 hineinragt. Beim Einbau des Rohrs R nimmt die Länge des Teils r den Wert l₁ an. Nach einer gewissen Zeit nach dem Einbau nimmt die Länge des Teils r den Wert l₂ an, wobei l₂ größer ist als l₁. Das Rohr R ist hierbei so ausgestaltet, dass es weniger stark oder gar nicht korrodiert als die Seitenwand SW, beispielsweise, indem das Rohr R mit einem Edelmetall, vorzugsweise vollständig, ummantelt ist. Unter einer vollständigen Ummantelung ist eine solche Ummantelung zu verstehen, bei welcher die Ummantelung lediglich eine kleine Druckausgleichsöffnung umfasst. Diese macht weniger als 0,1 % der Gesamtoberfläche des Rohrs R aus und befindet sich stets auf der glasabgewandten Fläche des Rohres R.

Die Vorrichtung 1 ist weiterhin in dem hier dargestellten Bereich charakterisiert durch den Abstand A₁ zum Zeitpunkt des Einbaus des Rohrs R. Dieser Abstand A₁ ist bestimmt durch das Niveau 5 des Innenbodens zum Zeitpunkt des Einbaus. Der Innenboden IB liegt hier nunmehr durch die Feuerfestkorrosion tiefer, sodass nunmehr der Abstand A₂ von Bedeutung ist. Dieser Abstand A₂ ist hier schematisch dargestellt und kann verstanden werden als der Abstand, welchen das Rohr zum mittleren Niveau des Innenbodens IB, welcher durch Feuerfestkorrosion gebildet ist, aufweist. Die Feuerfestkorrosion führt nämlich, wie hier schematisch dargestellt, nicht zu einem gleichmäßigen Abtrag des Feuerfestmaterials, sondern es kann vielmehr zur Ausbildung einer unregelmäßigen Oberfläche des Innenbodens IB kommen. Weiterhin schematisch dargestellt ist hier das ursprüngliche Niveau 5 des Innenbodens.

Die Glasschmelze GS in dem hier dargestellten Bereich der Vorrichtung kann somit weiterhin auch noch charakterisiert werden durch einen Schmelzbadhöhe SH₁ zum Zeitpunkt des Einbaus des Rohrs sowie durch eine Schmelzbadhöhe SH₂ zu einem Zeitpunkt nach dem Einbau, bei welchem bereits eine gewisse Korrosion des Feuerfestmaterials stattgefunden hat. Die Schmelzbadhöhe SH₂ ist größer als die Schmelzbadhöhe SH₁, da das ursprüngliche Niveau 5 des Innenbodens höher liegt als das (nicht bezeichnete) Niveau des Innenbodens IB nach Korrosion der Vorrichtung.

Das Rohr R ist hierbei weiterhin so ausgestaltet, dass es einen Kragen 61 aufweist, welcher an der Außenseite der Seitenwand SW angeordnet ist. Vorzugsweise ist dieser Kragen aus dem Material der Ummantelung (hier nicht bezeichnet) ausgebildet.

Weiterhin sind bezeichnet die Konvektionsströmung 3 sowie der Glasspiegel 2 sowie der Spiegel 41 der Bodenschicht 4, wobei der Spiegel 41 der Bodenschicht 4 unterhalb des Niveaus 5 des Innenbodens IB liegt. Es handelt sich hierbei also um den Spiegel 41 der Bodenschicht 4 bei bereits erfolgter Korrosion. Der Spiegel der Bodenschicht vor erfolgter Korrosion ist hier nicht dargestellt.

Das Rohr R ist so ausgebildet, dass zu jedem Zeitpunkt eine Einragung eines Teils r des Rohrs R in einen Bereich der Vorrichtung 1 gegeben ist. D.h. nicht erst nach einer Korrosion des Feuerfestmaterials ist eine Einragung gegeben, sondern das Rohr R ist bewusst so ausgebildet, dass es länger ist als die Seitenwand SW zum Zeitpunkt des Einbaus dick ist.

Auch der Abstand A₁ ist so gewählt, dass er zu jedem Zeitpunkt oberhalb des Spiegels 41 der Bodenschicht 4 liegt, nicht erst nach einer Absenkung des Niveaus 5 des Innenbodens IB.

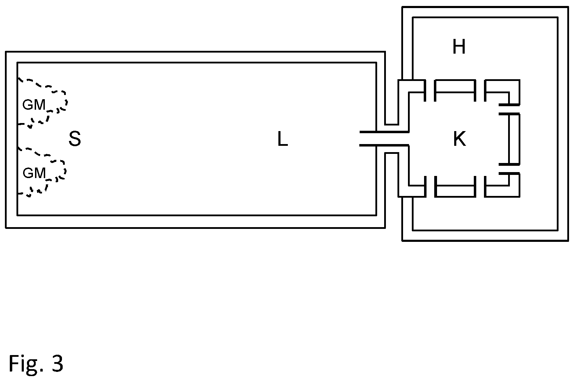

Fig. 3 zeigt eine weitere schematische und nicht maßstabsgetreue Vorrichtung 1 gemäß einer Ausführungsform. Die Vorrichtung 1 ist hier in einer schematischen Ansicht von oben zu sehen, also in Aufsicht. Die Vorrichtung 1 zum Herstellen eines Glasprodukts umfasst hier einen Bereich S zum Schmelzen einer Glasschmelze. Im Bereich S ist eingelegtes Gemenge GM zu sehen, welches zumindest teilweise noch nicht ausgeschmolzen ist. Der Bereich S geht nach rechts hin in den Bereich L zum Läutern der Glasschmelze GS (hier nicht bezeichnet) über. Der Bereich S und der Bereich L der Vorrichtung 1 sind hierbei baulich nicht getrennt, sondern gehen ineinander über. Weiterhin dargestellt ist der Bereich K zum Konditionieren der hier nicht bezeichneten Glasschmelze GS sowie der Bereich H zum Heißformgeben.

Weiterhin umfasst die Vorrichtung 1 hier wenigstens eine als ein Rohr R ausgebildete Überführungsvorrichtung, durch welche die Glasschmelze von einem Bereich, hier dem Bereich L, in einen anderen Bereich, hier den Bereich K, überführt werden kann. Die Vorrichtung 1 umfasst zusätzlich zu dieser ersten als ein Rohr R ausgebildeten Überführungsvorrichtung weitere als ein Rohr R ausgebildete Überführungsvorrichtungen, durch welche jeweils die Glasschmelze einem Bereich, hier dem Bereich K, in einen anderen Bereich, hier den Bereich H zum Heißformgeben, überführt werden kann.

Das Rohr R ist hier jeweils so ausgebildet, dass ein Teil r des Rohrs R durch eine Seitenwand SW eines Bereichs, hier des Bereichs L bzw. des Bereichs K, in den jeweiligen Bereich S, K hineinragt. Die Länge l des hineinragenden Teils r ist so gewählt, dass der Teil r des Rohrs R jeweils so weit in den jeweiligen Bereich, hier die Bereiche S bzw. K, hineinragt, dass weniger Fehlglas in das Rohr R gelangt in einen anderen Bereich, hier den Bereich K bzw. H, überführt wird, wobei bevorzugt die Länge l des hineinragenden Teils r des Rohrs R mindestens 25 mm, besonders bevorzugt mindestens 50 mm und ganz besonders bevorzugt mindestens so groß ist, wie der mittlere Außendurchmesser a (nicht bezeichnet) des Rohrquerschnitts, Die Länge l beträgt bevorzugt höchstens 500 mm.

Weiterhin ist der hineinragende Teil r des Rohrs R vom direkt darunterliegen Innenboden (nicht bezeichnet) der Vorrichtung in dem jeweiligen Bereich, hier dem Bereich L bzw. K, um einen Abstand A (nicht bezeichnet) beabstandet, der mindestens so hoch ist, dass weniger Fehlglas in das Rohr R gelangt und in einen anderen Bereich, hier den Bereich K bzw. H, der Vorrichtung 1 überführt wird, wobei bevorzugt der Abstand A mindestens 50 mm beträgt und besonders bevorzugt wenigstens um einen Faktor 1,5 größer ist als der mittlere Außendurchmesser a (hier nicht bezeichnet) des Rohrquerschnitts, wobei besonders bevorzugt der Abstand A höchstens die Glasbadtiefe in diesem Bereich abzüglich des 1,5-fachen Außendurchmessers a des Rohrquerschnitts vom Innenboden des entsprechenden Bereichs, hier also des Bereichs L bzw. K, beträgt.

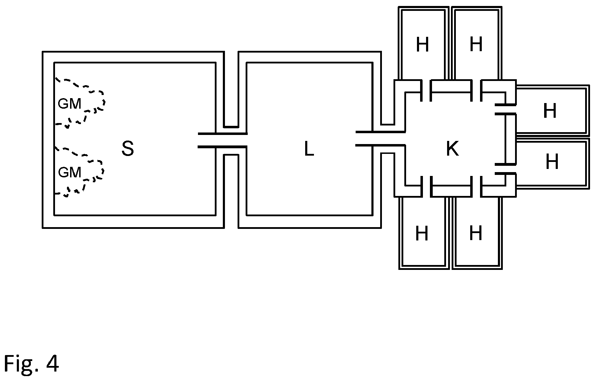

Fig. 4 zeigt eine weitere schematische und nicht maßstabsgetreue Darstellung einer Vorrichtung 1 nach einer Ausführungsform. Dargestellt sind die Bereiche S, L, K und H in einer schematischen Aufsicht auf die Vorrichtung 1. Hier sind der Bereich S und der Bereich L der Vorrichtung 1 baulich getrennt und durch eine als ein Rohr R ausgestaltete Überführungsvorrichtung miteinander so verbunden, dass durch die als Rohr R ausgestaltete Überführungsvorrichtung Glasschmelze GS (nicht bezeichnet) von dem Bereich S in den Bereich L überführt werden kann. Weiterhin umfasst die Vorrichtung 1 hier noch weitere als Rohr R ausgestaltete Überführungsvorrichtungen, durch welche Glasschmelze von dem Bereich L in den Bereich K bzw. von dem Bereich K in den Bereich H überführt werden kann. Die Vorrichtung 1 ist hier so ausgestaltet, dass sie mehrere Bereiche H umfasst, wobei hier jeder Bereich H jeweils einer als Rohr R ausgestalteten Überführungsvorrichtung zugeordnet ist. Im linken Bereich der Vorrichtung ist ebenfalls eingelegtes und zumindest teilweise noch nicht aufgeschmolzenes Gemenge GM schematisch dargestellt.

Allgemein ist es aber auch möglich, dass die Vorrichtung 1 lediglich einen Bereich H umfasst, wie beispielhaft auch in Fig. 3 dargestellt, wobei mehrere als Rohr R ausgestaltete Überführungsvorrichtungen zwischen dem Bereich K und dem Bereich H angeordnet sein können, sodass durch mehrere als Rohr R ausgestaltete Überführungsvorrichtungen von einem Bereich K Glasschmelze in einen Bereich H überführt werden kann.

In der hier schematisch dargestellten Vorrichtung 1 ist es beispielhaft möglich, dass ein Bereich H so ausgestaltet ist, dass ein Rohrzug, beispielsweise ein Rohrzug nach dem Danner-Verfahren oder nach dem Vello-Verfahren, erfolgt, und ein anderer Bereich H so ausgestaltet ist, dass hier dann eine Flachglasheißformgebung erfolgt. Es ist aber auch möglich, dass alle Bereiche so ausgelegt ist, dass jeweils eine Flachglasheißformgebung erfolgt oder ein Rohrzug.

Die als Rohr R ausgestaltete Überführungsvorrichtung ist hier jeweils so ausgestaltet, dass ein Teil r des Rohrs R durch eine Seitenwand (hier nicht bezeichnet) in den jeweiligen Bereich, hier den Bereich S, L bzw. K, in die Glasschmelze hineinragt. Die Länge l des hineinragenden Teils r des Rohrs R ist jeweils so gewählt, dass der Teil r des Rohrs R so weit in den jeweiligen Bereich S, L oder K hineinragt, dass weniger Fehlglas in das Rohr R gelangt und in einen anderen Bereich, hier den Bereich L, K oder H, der Vorrichtung 1 überführt wird. Bevorzugt beträgt die Länge l des hineinragenden Teils r des Rohrs R jeweils mindestens 25 mm, besonders bevorzugt mindestens 50 mm und ist ganz besonders bevorzugt mindestens so groß wie der mittlere Außendurchmesser a (hier nicht bezeichnet) des Rohrquerschnitts und beträgt vorzugsweise höchstens 500 mm. Weiterhin ist der hineinragende Teil r des Rohrs R vom direkt darunterliegenden Innenboden IB (hier nicht bezeichnet) des jeweiligen Bereichs, hier der Bereiche S, L bzw. K, um einen Abstand A (hier ebenfalls nicht bezeichnet) beabstandet, welcher mindestens so hoch ist, dass weniger Fehlglas in das Rohr R gelangt und in einen anderen Bereich, hier den oder die Bereiche L, K, H, der Vorrichtung 1 überführt wird, wobei bevorzugt der Abstand A mindestens 50 mm beträgt und besonders bevorzugt wenigstens um einen Faktor 1,5 größer ist als der mittlere Außendurchmesser a des Rohrquerschnitts, wobei vorzugsweise der Abstand A höchstens die Glasbadtiefe abzüglich des 1,5-fachen Außendurchmessers a des Rohrquerschnitts vom Innenboden des jeweiligen Bereichs, hier der Bereiche S, L, K, beträgt.

Gemäß einer weiteren Ausführungsform der Vorrichtung 1 ist das Rohr R in einer Seitenwand der Vorrichtung 1 zwischen dem Bereich L zum Läutern und dem Bereich K zum Konditionieren angeordnet ist, wobei der Teil r des Rohrs in den Bereich L zum Läutern hineinragt, sodass Glasschmelze von dem Bereich L zum Läutern in den Bereich K zum Konditionieren überführt wird oder überführt werden kann. Der hineinragende Teil r des Rohrs R ragt hierbei durch die Seitenwand in den Bereich L hinein.

Alternativ oder zusätzlich kann die Vorrichtung 1 gemäß dieser Ausführungsform so ausgestaltet sein, dass das Rohr R in einer Seitenwand der Vorrichtung 1 zwischen dem Bereich K zum Konditionieren und einen oder mehrere Bereichen H zu Heißformgeben der Glasschmelze angeordnet ist, wobei ein Teil r des Rohrs R in den Bereich K zum Konditionieren hineinragt, sodass Glasschmelze von dem Bereich K zum Konditionieren in den oder die Bereich H zum Heißformgeben überführt wird oder überführt werden kann, wobei der hineinragende Teil r des Rohrs R durch die Seitenwand in den Bereich K hineinragt.

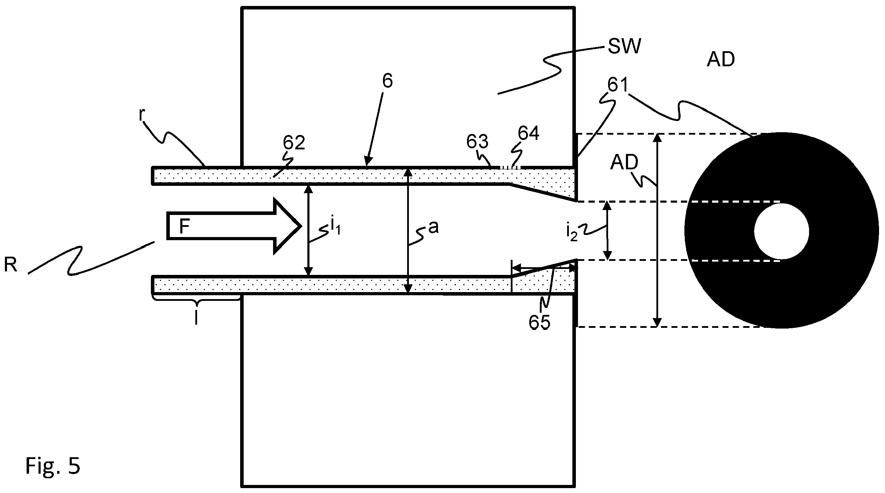

Fig. 5 zeigt eine schematische und nicht maßstabsgetreue Darstellung einer als Rohr R ausgestalteten Überführungsvorrichtung gemäß einer Ausführungsform. Das Rohr R ist hier so ausgebildet, dass sich der Innendurchmesser i des Rohrquerschnitts in Fließrichtung F der Glasschmelze (nicht bezeichnet) hin verjüngt. Das Rohr kann also beschrieben werden durch den maximalen Innendurchmesser i₁, welcher dem Innendurchmesser des Rohrquerschnitts in dem sich nicht verjüngenden Teil des Rohrs entspricht, und durch den minimalen Innendurchmesser i2. Die Verjüngung des Rohrs geschieht beispielsweise für den Fall eines Rohrs mit einem annährend runden Innenquerschnitt so, dass ein Kegelstumpf oder Konus gebildet wird, welcher durch die Länge 65 sowie den Innendurchmesser i₁ und den Innendurchmesser i2 beschrieben werden kann.

Das Rohr R ist hierbei so ausgebildet, dass es einen annähernd runden Rohrquerschnitt hat. Das Rohr ist hierbei so ausgebildet, dass es ein erstes Material 62 sowie ein zweites Material 63 umfasst. Das erste Material 62 kann ein Feuerfestmaterial sein, beispielsweise umfassend Zirkoniumoxid und/oder SiO₂ und/oder MgO, und/oder ein Refraktärmetall umfassen. Das zweite Materials 63 bildet hier die Ummantelung 6, d.h. das zweite Material 63 ummantelt hier also das erste Material 62 des Rohrs R vollständig, wobei unter einer vollständigen Ummantelung eine solche zu verstehen ist, bei welcher lediglich eine kleine Öffnung 64 zum Druckausgleich in der Ummantelung 6 vorhanden ist. Vorzugsweise umfasst das zweite Material 63 ein Edelmetall, wie beispielsweise Platin, oder besteht zumindest teilweise oder sogar vollständig aus einem Edelmetall, wie beispielsweise Platin, oder aus einer Edelmetalllegierung. Die Ummantelung 6 bildet an der Seite der Seitenwand SW, welche dem Bereich der Vorrichtung, in den der Teil r des Rohrs R hineinragt, abgewandt ist, einen Kragen 61, welcher an der Außenseite der Seitenwand S anliegt. Weiterhin weist die Ummantelung 6 eine Druckausgleichsöffnung 64 auf.

Hier ist also das Rohr R mit einem Material 63, welches vorzugsweise als Edelmetall umfassendes Material ausgebildet ist oder zumindest teilweise aus einem Edelmetall besteht und auch vollständig aus einem Edelmetall oder einer Legierung eines Edelmetalls gebildet sein kann, ummantelt. Allgemein, ohne Beschränkung auf das hier abgebildete Beispiel eines Rohrs R, kann aber auch nur der Teil des Rohrs R, welcher in direktem Kontakt mit der Glasschmelze steht, mit einem Material 63 bedeckt sein. Dies wäre hier die Innenwand des Rohrs R, der Bereich der Stirnseiten des Rohrs R und der Teil r des Rohrs, welcher in die Glasschmelze hineinragt.

Die Ummantelung 6 umfasst hier weiterhin eine Druckausgleichsöffnung 64.

Im Folgenden wird eine spezielle Ausführungsform beschrieben, um die Erfindung weiter zu verdeutlichen:
Gemäß einer Ausführungsform ist es möglich, dass die Seitenwand SW beispielsweise eine Dicke von 300 mm aufweist, wobei diese Dicke hier die Ausgangsdicke ist, also vor einer möglichen Korrosion der Seitenwand SW durch die Glasschmelze GS. Das Rohr R kann eine Gesamtlänge von 470 mm aufweisen. Mithin wäre die Länge l des Teils r des Rohrs R hier 170 mm. Diese Länge l wäre als Länge l₁ zu verstehen, also als Länge zum Zeitpunkt des Einbaus des Rohrs R. Diese Länge l bzw. l₁ ist hier also mindestens so groß wie der mittlere Außendurchmesser a des Rohrquerschnitts, nämlich mindestens 160 mm, und ist weiterhin hier größer als 160 mm, nämlich 170 mm lang. Das Rohr R ist hierbei annähernd rund ausgestaltet und kann daher durch einen Innendurchmesser i₁ von 130 mm und einen Außendurchmesser a von 160 mm beschrieben werden. Der Innendurchmesser i₁ ist hierbei der größte Innendurchmesser des Rohrquerschnitts. Das Rohr weist, wie auch schematisch in Fig. 5 dargestellt, einen sich verjüngen Bereich auf, welcher eine kegelstumpfförmige Form aufweist. Dieser sich verjüngende Bereich wird daher auch häufig als Konus bezeichnet. Die Länge 65 des Konus' des Rohrs R kann beispielsweise 30 mm betragen. Der Innendurchmesser i2 als minimaler Innendurchmesser kann 120 mm betragen.

Das Rohr R ist ummantelt, wozu beispielsweise die Ummantelung 6 aus dem Material 63 gebildet sein kann, beispielsweise aus einer Legierung umfassend 90 Gew.-% Platin und 10 Gew.-% Rhodium. Im Bereich des Korpus des Rohres kann das Material 63 beispielsweise aus einem Blech mit einer Dicke von 0,7 mm gebildet sein. Der Kragen 61 kann ebenfalls aus einem solchen Blech ausgebildet, sein, insbesondere mit derselben Dicke wie die Ummantelung 6 im Bereich des Korpus des Rohres R aufweist. Es ist aber auch möglich, dass das Material 63 im Bereich des Kragens eine andere, beispielsweise ein größere, Dicke aufweist als im Bereich des Korpus des Rohrs, beispielsweise ein Dicke von 1 mm. Der Kragen 61 kann, wie hier schematisch dargestellt, beispielsweise als Scheibe ausgebildet sein, welche beispielsweise einen Außendurchmesser AD, hier von 260 mm aufweisen kann, wobei der Innendurchmesser der Scheibe dem Innendurchmesser i2 des Rohrquerschnitts entspricht.

Für ein Rohr mit einem Außendurchmesser a von 160 mm ist es vorteilhaft, wenn die Bohrung durch die Seitenwand SW einen Durchmesser zwischen 164 mm und 166 mm aufweist. Dies trägt den Fertigungstoleranzen des Rohrs R Rechnung und berücksichtigt weiterhin auch den Einfluss der Ummantelung 6.

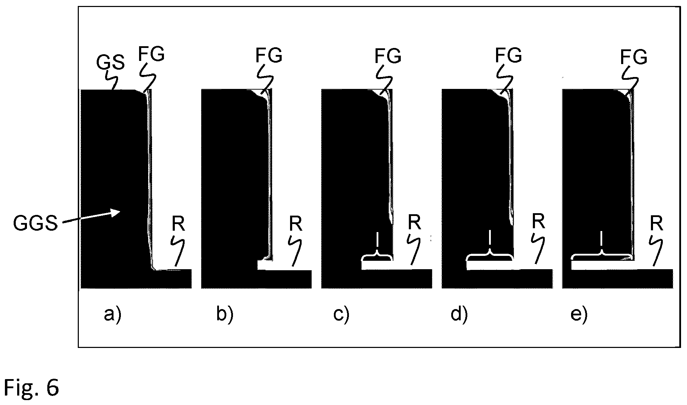

Fig. 6 zeigt in skizzenhafter Darstellung einen Teil einer Vorrichtung 1 zum Herstellen eines Glasprodukts umfassend eine Überführungsvorrichtung, durch die Glasschmelze GS von einem Bereich der Vorrichtung in einen anderen Bereich (nicht dargestellt) überführt wird oder überführt werden kann. Der Teil der Vorrichtung 1 ist hier fünffach dargestellt, wobei sich die Vorrichtungen 1 hier jeweils durch die Länge l des einragenden Teils r des Rohrs, von welchem lediglich der obere Teil dargestellt ist, unterscheiden.

Skizzenhaft angedeutet ist hier, dass die Glasschmelze GS sowohl Grundglasschmelze GGS (Gutglas) umfasst als auch Fehlglas FG. Glasschmelze GS und Gutglasschmelze GGS sind hier der Übersichtlichkeit halber nur in Teil a) der Fig 6 bezeichnet.

Wenn, wie in Teil a) der Fig. 6, kein Teil r (hier nicht bezeichnet) des Rohrs R in die Glasschmelze einragt, kann Fehlglas FG gleich in die als Rohr R ausgebildete Überführungsvorrichtung gelangen. In Teil b) der Fig. 6 beträgt die Einragung 25 mm und zeigt die minimale Grenze für eine ausreichende Einragung auf. Der Übersichtlichkeit halber ist die Länge l hier nicht bezeichnet.

In Teilen c) und d) der Fig. 6 ist eine Einragung des Teils r (hier nicht bezeichnet) gegeben, welche sicher ausreicht, um einen Eintrag von Fehlglas FG in das Rohr zumindest zu vermindern. Die Fehlglasströmung endet hier oberhalb des Rohrs. Die Einragung des Rohrs R führt nämlich lokal zu einer Änderung der Konvektionsströme. Jedoch kann es hier passieren, dass eine neue Wirbelströmung zu Korrosion resultiert, nämlich am Übergang zwischen Rohr und Seitenwand. In Teil c) beträgt die Einragung 50 mm, also die Länge des Teils r 50 mm, und in Teil d) 75 mm.

Wird, wie in Teil e) der Fig. 6 schematisch dargestellt, die Länge l des Teils r weiter erhöht, könnte eine solche Korrosion durch Wirbelströmung evtl. verhindert werden. In Teil e) ist die Länge des Teils r 100 mm.

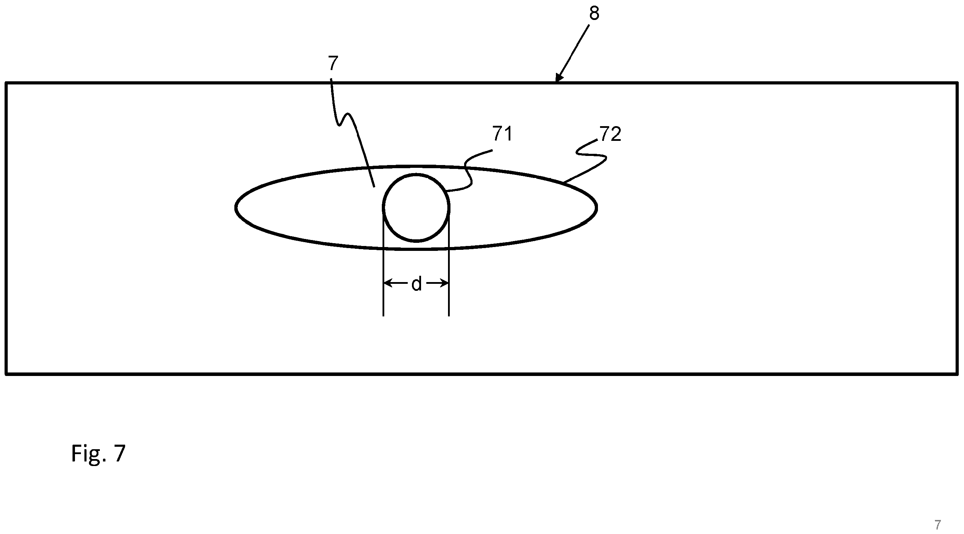

Fig. 7 zeigt schließlich eine schematische und nicht maßstabsgetreue Darstellung eines Knotens 7 in einem Glasprodukt 8, welches beispielsweise als Glasrohr ausgebildet sein kann, zur Verdeutlichung des mittleren Durchmessers. Hierbei wird der Durchmesser d als Äquivalentdurchmesser d beschrieben, wobei der Äquivalentdurchmesser d hier vorzugsweise als Volumenäquivalentdurchmesser angegeben ist. Fig. 7 zeigt schematisch einen Teil eines Glasprodukts 8, welches einen Einschluss, hier einen Knoten 7, umfasst. Dieser Knoten 7 hat einen Kern 71, welcher durch einen Durchmesse d, beispielsweise den sogenannten Äquivalentdurchmesser, beschrieben werden kann und welcher hier annähernd kugelförmig ist. Weiterhin umfasst der Knoten 7 schlierenartige oder pseudoelliptische Ausformungen 72, welche den Kern 71 des Knotens 7 umgeben. Diese schlierenartigen oder pseudoelliptischen Ausformungen 72 werden hinsichtlich des Durchmessers d, wie beispielsweise dem mittleren Durchmesser oder dem Äquivalentdurchmessers, des Knotens 7 nicht berücksichtigt.

Sofern daher im Rahmen der vorliegenden Offenbarung auf den Durchmesser eines Knotens 7 abgestellt wird, handelt es sich dabei um den Durchmesser des Kerns 71.

### Bezuqszeichenliste

- 1: Vorrichtung zum Herstellen eines Glasprodukts
- 2: Glasspiegel
- 3: Konvektionsströmung
- 4: Bodenschicht
- 41: Spiegel der Bodenschicht
- 5: ursprüngliches Niveau des Innenbodens
- 6: Ummantelung
- 61: Kragen
- 62: erstes Material
- 63: zweites Material, Material der Ummantelung
- 64: Druckausgleichöffnung in Ummantelung 6
- 65: Konuslänge
- 7: Knoten
- 71: Kern des Knotens
- 72: Ausformung des Knotens
- 8: Glasprodukt
- d: Durchmesser des Knotens (bzw. des Kerns des Knotens)
- R: Rohr
- r: in Glasschmelze hineinragender Teil des Rohrs
- l: Länge des einragenden Teils
- l₁: Länge des einragenden Teils bei Einbau des Rohrs
- l₂: Länge des einragenden Teils nach erfolgter Korrosion des Feuerfestmaterials
- a: mittlere Außendurchmesser des Rohrs
- A: Abstand des Rohrs vom Innenboden
- A₁: Abstand des Rohrs vom Innenboden bei Einbau des Rohrs
- A2: Abstand des Rohrs vom Innenboden nach erfolgter Korrosion des Feuerfestmaterials
- SH: Höhe des Schmelzbads
- SH₁: Höhe des Schmelzbads zum Zeitpunkt des Einbaus des Rohrs
- SH₂: Höhe des Schmelzbads nach erfolgter Korrosion des Feuerfestmaterials
- GM: Gemenge
- GS: Glasschmelze
- SW: Seitenwand
- IB: Innenboden
- S: Bereich zum Schmelzen
- L: Bereich zum Läutern
- K: Bereich zum Konditionieren
- H: Bereich zum Heißformgeben
- i: Innenradius des Rohrs
- i₁: maximaler Innenradius des Rohrs
- i₂: minimaler Innenradius des Rohrs
- GGS: Gutglasschmelze
- FG: Fehlglas
- AD: Außendurchmesser des Kragens

## Patentansprüche

1. Vorrichtung zum Herstellen eines Glasprodukts (8), umfassend
- einen Bereich (S) zum Schmelzen, insbesondere zum Einschmelzen, einer Glasschmelze (GS),
- insbesondere einen Bereich (L) zum Läutern einer Glasschmelze (GS),
- insbesondere einen Bereich (K) zum Konditionieren einer Glasschmelze (GS),
- einen Bereich (H) zum Heißformgeben einer Glasschmelze (GS) unter Erhalt eines Glasprodukts sowie
- wenigstens eine als ein Rohr (R) ausgebildete Überführungsvorrichtung, durch welche die Glasschmelze (GS) von einem Bereich (S, L, K, H) der Vorrichtung in einen anderen Bereich (S, L, K, H) der Vorrichtung überführt werden kann,
wobei das Rohr (R) so ausgebildet ist, dass ein Teil (r) des Rohrs (R) durch eine Seitenwand (SW) eines Bereichs (S, L, K, H) in die Glasschmelze (GS) hineinragt,
wobei die Länge (l) des hineinragenden Teils (r) vorzugsweise so gewählt ist, dass der Teil (r) des Rohrs (R) so weit in den Bereich (S, L, K, H) hineinragt, dass weniger Fehlglas in das Rohr gelangt und in einen anderen Bereich (S, L, K, H) der Vorrichtung überführt wird,
wobei bevorzugt die Länge (l) des hineinragenden Teils (r) des Rohrs (R) mindestens 25 mm, besonders bevorzugt mindestens 50 mm beträgt und ganz besonders bevorzugt mindestens so groß ist, wie der mittlere Außendurchmesser (a) des Rohrquerschnitts, und vorzugsweise höchstens 500 mm beträgt, und wobei der hineinragende Teil (r) des Rohrs (R) vom direkt darunterliegenden Innenboden (IB) der Vorrichtung in diesem Bereich (S, L, K, H) um einen Abstand (A) beabstandet ist, der mindestens so hoch ist, dass weniger Fehlglas in das Rohr gelangt und in einen anderen Bereich (S, L, K, H) der Vorrichtung überführt wird,
wobei der Abstand (A) bevorzugt mindestens 50 mm beträgt und besonders bevorzugt wenigstens um einen Faktor 1,5 größer ist als der mittlere Außendurchmesser (a) des Rohrquerschnitts, wobei bevorzugt der Abstand (A) höchstens die Glasbadtiefe abzüglich des 1,5-fachen Außendurchmessers des Rohrquerschnitts vom Innenboden des Bereichs (S, L, K, H) der Vorrichtung beträgt.

2. Vorrichtung zum Herstellen eines Glasprodukts (8) nach Anspruch 1, umfassend
- einen Bereich (S) zum Schmelzen, insbesondere zum Einschmelzen, einer Glasschmelze (GS),
- insbesondere einen Bereich (L) zum Läutern einer Glasschmelze (GS),
- einen Bereich (K) zum Konditionieren einer Glasschmelze (GS),
- einen Bereich (H) zum Heißformgeben einer Glasschmelze (GS) unter Erhalt eines Glasprodukts sowie
- wenigstens eine als ein Rohr (R) ausgebildete Überführungsvorrichtung, durch welche die Glasschmelze (GS) von einem Bereich (K) der Vorrichtung zum Konditionieren in den Bereich (H) der Vorrichtung zum Heißformgeben (überführt werden kann,
wobei das Rohr (R) so ausgebildet ist, dass ein Teil (r) des Rohrs (R) durch eine Seitenwand (SW) des ersten Bereichs (K) in die Glasschmelze (GS) hineinragt,
wobei die Länge (l) des hineinragenden Teils (r) vorzugsweise so gewählt ist, dass der Teil (r) des Rohrs (R) so weit in den Bereich der Vorrichtung zum Konditionieren (K) hineinragt, dass weniger Fehlglas in das Rohr gelangt und in den Bereich (H) der Vorrichtung zum Heißformgeben (überführt wird,
wobei bevorzugt die Länge (l) des hineinragenden Teils (r) des Rohrs (R) mindestens 25 mm, besonders bevorzugt mindestens 50 mm beträgt und ganz besonders bevorzugt mindestens so groß ist, wie der mittlere Außendurchmesser (a) des Rohrquerschnitts, und vorzugsweise höchstens 500 mm beträgt, und
wobei der hineinragende Teil (r) des Rohrs (R) vom direkt darunterliegenden Innenboden (IB) der Vorrichtung in dem Bereich (K) der Vorrichtung zum Konditionieren um einen Abstand (A) beabstandet ist, der mindestens so hoch ist, dass weniger Fehlglas in das Rohr gelangt und in den Bereich (H) der Vorrichtung zum Heißformgeben (überführt wird, wobei bevorzugt der Abstand (A) mindestens 50 mm beträgt und besonders bevorzugt wenigstens um einen Faktor 1,5 größer ist als der mittlere Außendurchmesser (a) des Rohrquerschnitts, wobei bevorzugt der Abstand (A) höchstens die Glasbadtiefe abzüglich des 1,5-fachen Außendurchmessers des Rohrquerschnitts vom Innenboden des Bereichs (S, L) der Vorrichtung beträgt.

3. Vorrichtung nach einem der Ansprüche 1 oder 2, umfassend
- einen Bereich (S) zum Schmelzen, insbesondere zum Einschmelzen, einer Glasschmelze (GS),
- insbesondere einen Bereich (L) zum Läutern einer Glasschmelze (GS),
- insbesondere einen Bereich (K) zum Konditionieren einer Glasschmelze (GS),
- einen Bereich (H) zum Heißformgeben einer Glasschmelze (GS) unter Erhalt eines Glasprodukts sowie
- wenigstens eine als ein Rohr (R) ausgebildete Überführungsvorrichtung, durch welche die Glasschmelze (GS) von einem ersten Bereich (S, L, K, H) der Vorrichtung in einen anderen Bereich der Vorrichtung (S, L, K, H) überführt werden kann,
wobei das Rohr (R) so ausgebildet ist, dass ein Teil (r) des Rohrs (R) durch eine Seitenwand (SW) eines Bereichs (S, L, K, H) in die Glasschmelze (GS) hineinragt,
wobei die Länge (l) des hineinragenden Teils (r) des Rohrs (R) mindestens 25 mm, bevorzugt mindestens 50 mm beträgt und besonders bevorzugt mindestens so groß ist wie der mittlere Außendurchmesser (a) des Rohrquerschnitts, und vorzugsweise höchstens 500 mm beträgt, und
wobei der hineinragende Teil (r) des Rohrs (R) vom direkt darunterliegenden Innenboden (IB) der Vorrichtung in diesem Bereich (S, L, K, H) um einen Abstand (A) beabstandet ist, der mindestens 50 mm beträgt und bevorzugt wenigstens um einen Faktor 1,5 größer ist als der mittlere Außendurchmesser (a) des Rohrquerschnitts, wobei bevorzugt der Abstand (A) höchstens die Glasbadtiefe abzüglich des 1,5-fachen Außendurchmessers des Rohrquerschnitts vom Innenboden des Bereichs (S, L, K, H) der Vorrichtung beträgt.

4. Vorrichtung nach einem der Ansprüche 1 bis 3,
wobei das Rohr (R) in einer Seitenwand (SW) der Vorrichtung zwischen dem Bereich (L) zum Läutern und dem Bereich (K) zum Konditionieren der Glasschmelze (GS) angeordnet ist, wobei ein Teil des Rohres in den Bereich (L) zum Läutern hineinragt, sodass Glasschmelze (GS) von dem Bereich (L) zum Läutern in den Bereich (K) zum Konditionieren überführt wird oder überführt werden kann, und/oder
wobei das Rohr (R) in einer Seitenwand (SW) der Vorrichtung zwischen dem Bereich (K) zum Konditionieren und dem Bereich (H) zum Heißformgeben der Glasschmelze (GS) angeordnet ist, wobei ein Teil (r) des Rohrs (R) in den Bereich (K) zum Konditionieren hineinragt, sodass Glasschmelze (GS) von dem Bereich (K) zum Konditionieren in den Bereich (H) zum Heißformgeben überführt wird oder überführt werden kann,
wobei der hineinragende Teil (r) des Rohrs (R) durch die Seitenwand (SW) in den Bereich (L, K) hineinragt.

5. Vorrichtung nach einem der Ansprüche 1 bis 4, wobei das Rohr (R) so ausgebildet ist, dass sich der mittlere Innendurchmesser (i) des Rohrquerschnitts in Fließrichtung (F) der Glasschmelze (GS) hin verjüngt.

6. Vorrichtung nach einem der Ansprüche 1 bis 5, wobei das Rohr (R) ein Feuerfestmaterial und/oder ein Edelmetall und/oder ein Refraktärmetall umfasst.

7. Vorrichtung nach Anspruch 6, wobei das Rohr (R) aus einem Feuerfestmaterial und/oder einem Refraktärmetall besteht, wobei mindestens der Teil, welcher im direkten Kontakt mit der Glasschmelze steht, bevorzugt das ganze Rohr, mit einem Edelmetall umfassenden Material ummantelt ist.

8. Vorrichtung nach einem der Ansprüche 1 bis 7, wobei sich in dem Bereich der Vorrichtung, innerhalb dessen das Rohr (R) angeordnet ist, unterhalb des Rohrs (R) ein Bodenablauf (B) befindet, welcher geöffnet werden kann, sodass angesammelte Ablagerung eines Fehlglases abgezogen werden kann, wobei der Bodenablauf und/oder das Rohr in jedem Bereich der Vorrichtung zum Herstellen eines Glasprodukts angeordnet sein können, und bevorzugt in dem Bereich (H) zum Heißformgeben angeordnet sind.

9. Vorrichtung nach einem der Ansprüche 1 bis 8, wobei die Vorrichtung ausgelegt ist zur Heißformgebung eines Glases umfassend Rohrzug oder Flachglasheißformgebung.

10. Verfahren zum Herstellen eines Glasprodukts (8) umfassend die Schritte des
- Schmelzens, bevorzugt des Einschmelzens, einer Glasschmelze,
- insbesondere des Läuterns der Glasschmelze,
- insbesondere des Konditionierens der Glasschmelze,
- Heißformgebens der Glasschmelze unter Erhalt eines Glasprodukts,
wobei wenigstens einer der Verfahrensschritte in einer Vorrichtung zum Herstellen eines Glasprodukts (8), welche ein Rohr (R), welches ausgelegt ist, die Glasschmelze von einem Bereich der Vorrichtung in einen anderen Bereich zu überführen, umfasst, durchgeführt wird, und
wobei das Rohr (R) so ausgebildet ist, dass ein Teil (r) des Rohrs (R) mit einer Länge (l) durch eine Seitenwand (SW) eines Bereichs (S, L, K, H) in die Glasschmelze (GS) hineinragt,
wobei die Länge (l) des hineinragenden Teils (r) so gewählt ist, dass der Teil (r) des Rohrs (R) so weit in den Bereich (S, L, K, H) hineinragt, dass weniger Fehlglas in das Rohr gelangt und in einen anderen Bereich (S, L, K, H) der Vorrichtung überführt wird, wobei bevorzugt die Länge (l) des hineinragenden Teils (r) des Rohrs (R) mindestens 25 mm, besonders bevorzugt mindestens 50 mm beträgt und ganz besonders bevorzugt mindestens so groß ist, wie der mittlere Außendurchmesser des Rohrquerschnitts, und vorzugsweise höchstens 500 mm beträgt,
und wobei der hineinragende Teil (r) des Rohrs (R) vom direkt darunterliegenden Innenboden (IB) der Vorrichtung in diesem Bereich (S, L, K, H) um einen Abstand (A) beabstandet ist, der mindestens so hoch ist, dass weniger Fehlglas in das Rohr gelangt und in einen anderen Bereich (S, L, K, H) der Vorrichtung überführt wird, wobei bevorzugt der Abstand (A) mindestens 50 mm beträgt und besonders bevorzugt wenigstens um einen Faktor 1,5 größer ist als der mittlere Außendurchmesser (a) des Rohrquerschnitts wobei vorzugsweise der Abstand (A) höchstens die Glasbadtiefe abzüglich des 1,5-fachen Außendurchmessers des Rohrquerschnitts vom Innenboden des Bereichs (S, L, K, H) der Vorrichtung beträgt,
sodass in wenigstens einem der Verfahrensschritte Glasschmelze (GS) von wenigstens einem Bereich (S, L, K, H) der Vorrichtung durch das Rohr (R) in einen anderen Bereich (S, L, K, H) der Vorrichtung gelangt.

11. Verfahren zum Herstellen eines Glasprodukts (8)
nach Anspruch 10,
umfassend die Schritte des
- Schmelzens, bevorzugt des Einschmelzens, einer Glasschmelze,
- insbesondere des Läuterns der Glasschmelze,
- des Konditionierens der Glasschmelze,
- Heißformgebens der Glasschmelze unter Erhalt eines Glasprodukts,
wobei wenigstens einer der Verfahrensschritte in einer Vorrichtung zum Herstellen eines Glasprodukts (8), welche ein Rohr (R), welches ausgelegt ist, die Glasschmelze von einem Bereich der Vorrichtung in einen anderen Bereich zu überführen, umfasst, durchgeführt wird, und
wobei das Rohr (R) so ausgebildet ist, dass ein Teil (r) des Rohrs (R) mit einer Länge (l) durch eine Seitenwand (SW) eines Bereichs (K) der Vorrichtung zum Konditionieren in die Glasschmelze (GS) hineinragt,
wobei die Länge (l) des hineinragenden Teils (r) so gewählt ist, dass der Teil (r) des Rohrs (R) so weit in den Bereich (K) der Vorrichtung zum Konditionieren hineinragt, dass weniger Fehlglas in das Rohr gelangt und in den Bereich (H) der Vorrichtung zum Heißformgeben () überführt wird, wobei bevorzugt die Länge (l) des hineinragenden Teils (r) des Rohrs (R) mindestens 25 mm, besonders bevorzugt mindestens 50 mm beträgt und ganz besonders bevorzugt mindestens so groß ist, wie der mittlere Außendurchmesser des Rohrquerschnitts, und vorzugsweise höchstens 500 mm beträgt,
und wobei der hineinragende Teil (r) des Rohrs (R) vom direkt darunterliegenden Innenboden (IB) der Vorrichtung in diesem Bereich (K) der Vorrichtung zum Konditionieren () um einen Abstand (A) beabstandet ist, der mindestens so hoch ist, dass weniger Fehlglas in das Rohr gelangt und in den Bereich der Vorrichtung (H) zum Heißformgeben überführt wird, wobei bevorzugt der Abstand (A) mindestens 50 mm beträgt und besonders bevorzugt wenigstens um einen Faktor 1,5 größer ist als der mittlere Außendurchmesser (a) des Rohrquerschnitts wobei vorzugsweise der Abstand (A) höchstens die Glasbadtiefe abzüglich des 1,5-fachen Außendurchmessers des Rohrquerschnitts vom Innenboden des Bereichs (K) der Vorrichtung zum Konditionieren beträgt,
sodass in wenigstens einem der Verfahrensschritte Glasschmelze (GS) von wenigstens dem Bereich (K) der Vorrichtung zum Konditionieren durch das Rohr (R) in den Bereich (H) der Vorrichtung zum Heißformgeben gelangt.

12. Verfahren zum Herstellen eines Glasprodukts (8),
nach einem der Ansprüche 10 oder 11,
umfassend die Schritte des
- Schmelzens, bevorzugt des Einschmelzens, einer Glasschmelze,
- insbesondere des Läuterns der Glasschmelze,
- insbesondere des Konditionierens der Glasschmelze,
- Heißformgebens der Glasschmelze unter Erhalt eines Glasprodukts,
wobei wenigstens einer der Verfahrensschritte in einer Vorrichtung zum Herstellen eines Glasprodukts (8), welche ein Rohr (R), welches ausgelegt ist, die Glasschmelze von einem Bereich der Vorrichtung in einen anderen Bereich zu überführen, umfasst, durchgeführt wird, und
wobei das Rohr (R) so ausgebildet ist, dass ein Teil (r) des Rohrs (R) mit einer Länge (l) durch eine Seitenwand (SW) eines Bereichs (S, L, K, H) in die Glasschmelze (GS) hineinragt,
wobei die Länge (l) des hineinragenden Teils (r) des Rohrs (R) mindestens 25 mm, bevorzugt mindestens 50 mm beträgt und besonders bevorzugt mindestens so groß ist wie der mittlere Außendurchmesser (a) des Rohrquerschnitts, und vorzugsweise höchstens 500 mm beträgt,
und wobei der hineinragende Teil (r) des Rohrs (R) vom direkt darunterliegenden Innenboden (IB) der Vorrichtung in diesem Bereich (S, L, K, H) um einen Abstand (A) beabstandet ist, der mindestens 50 mm beträgt und bevorzugt wenigstens um einen Faktor 1,5 größer ist als der mittlere Außendurchmesser (a) des Rohrquerschnitts, wobei bevorzugt der Abstand (A) höchstens die Glasbadtiefe abzüglich des 1,5-fachen Außendurchmessers des Rohrquerschnitts vom Innenboden des Bereichs (S, L, K, H) der Vorrichtung beträgt.,
sodass in wenigstens einem der Verfahrensschritte Glasschmelze (GS) von wenigstens einem Bereich (S, L, K, H) der Vorrichtung durch das Rohr (R) in einen anderen Bereich (S, L, K, H) der Vorrichtung gelangt.

13. Glasprodukt (8), vorzugsweise hergestellt oder herstellbar in einem Verfahren nach Anspruch 10 bis 12 und/oder in einer Vorrichtung nach einem der Ansprüche 1 bis 9, umfassend keine Knoten mit einem Durchmesser von mehr als 1,5 mm auf eine Palette Glas, bevorzugt keine Knoten mit einem Durchmesser von 1,2 mm auf eine Palette Glas, besonders bevorzugt keine Knoten mit einem Durchmesser von 1,0 mm auf eine Palette Glas, mehr bevorzugt keine Knoten mit einem Durchmesser von mehr als 0,9 mm auf eine Palette Glas und ganz besonders bevorzugt keine Knoten mit einem Durchmesser von mehr als 0,8 mm auf eine Palette Glas.

14. Glasprodukt nach Anspruch 13, wobei das Glasprodukt (8) weniger als 3,4 Knoten (7) pro Kilogramm Glas mit einem Durchmesser (d) von mehr als 0,5 mm und bis höchstens 0,8 mm umfasst, bevorzugt weniger als 3,3 Knoten pro Kilogramm Glas, mehr bevorzugt weniger als 3,2 Knoten pro Kilogramm Glas und ganz besonders bevorzugt weniger als 3 Knoten pro Kilogramm Glas.

15. Glasprodukt nach einem der Ansprüche 13 oder 14, wobei das Glasprodukt ein Glasrohr oder ein Glasstab ist.
